(19) Europäisches Patentamt

European Patent Office

Office européen des brevets

(11) **EP 0 373 898 B1**

(12) **EUROPEAN PATENT SPECIFICATION**

(45) Date of publication and mention
of the grant of the patent:
**07.02.1996 Bulletin 1996/06**

(51) Int Cl.6: **G11B 11/10**

(21) Application number: **89312995.7**

(22) Date of filing: **12.12.1989**

(54) **Over write capable magnetiooptical recording medium**

Magnetooptischer Aufzeichnungsträger, geeignet zum Ueberschreiben

Milieu d'enregistrement magnéto-optique avec capacité de sur-inscription

(84) Designated Contracting States:
**DE FR GB IT**

(30) Priority: **12.12.1988 JP 313624/88**

(43) Date of publication of application:
**20.06.1990 Bulletin 1990/25**

(73) Proprietor: **NIKON CORPORATION**
**Tokyo (JP)**

(72) Inventor: **Matsumoto, Hiroyuki**
**Tokyo (JP)**

(74) Representative: **Burke, Steven David et al**
**London SW1H 0RJ (GB)**

(56) References cited:
**EP-A- 0 217 067**          **EP-A- 0 225 141**
**EP-A- 0 258 978**          **EP-A- 0 285 241**
**DE-A- 3 335 689**          **DE-A- 3 619 618**

- **PATENT ABSTRACTS OF JAPAN vol. 9, no. 248 (E-347) 04 October 85,& JP-A-60 098611 (KUREHA KAGAKU KOGYO K.K.) 01 June 85,**
- **PATENT ABSTRACTS OF JAPAN vol. 12, no. 23 (P-658)(2870) 23 January 1988,& JP-A- 62 175948 (NIPPON KOGAKU K.K.) 01 August 1987,**
- **PATENT ABSTRACTS OF JAPAN vol. 12, no. 463 (P-796) 06 December 1988,& JP-A-63 184942 (SUMIMOTO METAL MINING CO LTD) 03 July 1988,**
- **PATENT ABSTRACTS OF JAPAN vol. 8, no. 157 (P-288) 20 July 1984,& JP-A-59 053855 (RICOH K.K.) 28 March 1984,**

**Description**

<u>BACKGROUND OF THE INVENTION</u>

<u>Field of the Invention</u>

The present invention relates to an over write capable magnetooptical recording medium in response to a modulated optical energy beam.

<u>Related Background Art</u>

In recent years, many efforts have been made to develop an optical recording/reproduction method, an optical recording apparatus and a medium used therefor, which can satisfy various requirements including high density, large capacity, high speed access, and high recording/reproduction speed.

Of various optical recording/reproduction methods, the magnetooptical recording/reproduction method is most attractive due to its unique advantages that information can be erased after use and new information can be written thereon.

A recording medium used in a magnetooptical recording/reproduction method has a perpendicular magnetic layer or layers as a recording layer. The magnetic layer comprises, for example, amorphous GdFe, GdCo, GdFeCo, TbFe, TbCo, TbFeCo and the like. Concentrical or spiral tracks are formed on the recording layer, and data is recorded on the tracks. Note that in this specification, one of the "upward" and "downward" directions of magnetization with respect to a film surface is defined as an "A direction" and the other one is defined as a "non-A direction". Data to be recorded is binarized in advance, and is recorded by a bit ($B_1$) having "A-directed" magnetization and a bit ($B_0$) having "non-A-directed" magnetization. These bits $B_1$ and $B_0$ correspond to "1" and "0" levels of a digital signal, respectively. However, in general, the direction of magnetization of the recording tracks can be aligned in the "non-A-direction" by applying a strong bias field before recording. This processing is called "initialization". Thereafter, the bit ($B_1$) having "A-directed" magnetization is formed on the tracks. Data is recorded in accordance with the presence/ absence and/or a bit length of the bit ($B_1$).

<u>Principle of Bit Formation</u>

In the bit formation, a characteristic feature of laser, i. e., excellent coherence in space and time, is effectively used to focus a beam into a spot as small as the diffraction limit determined by the wavelength of the laser light. The focused light is radiated onto the track surface to write data by producing bits less than 1 μm in diamter on the recording layer. In the optical recording, a recording density up to $10^8$ bit/cm$^2$ can be theoretically attained, since a laser beam can be concentrated into a spot with a size as small as its wavelength.

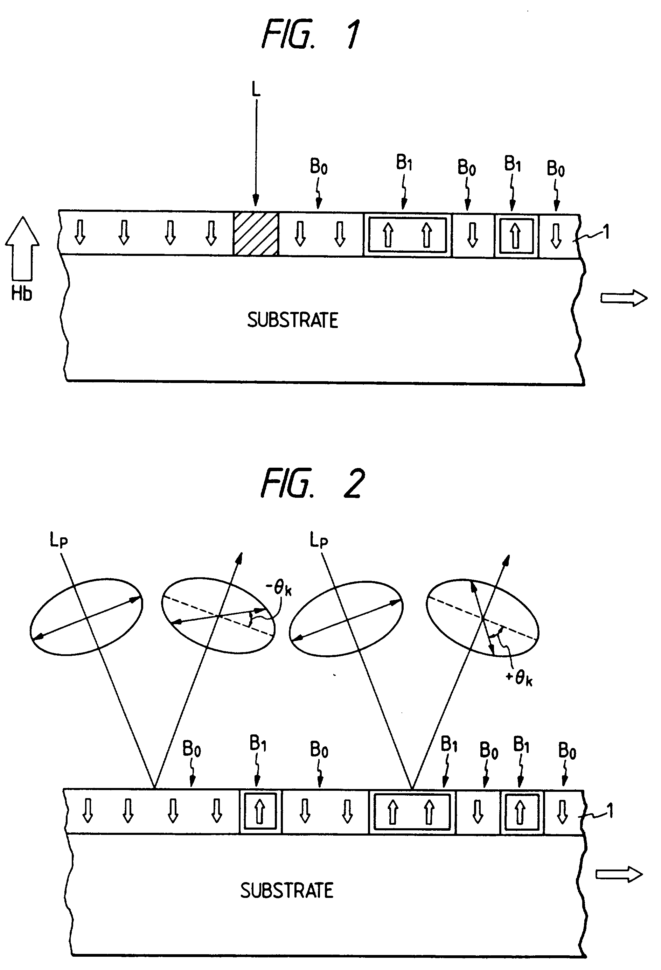

As shown in Fig. 1, in the magnetooptical recording, a laser beam L is focused onto a recording layer 1 to heat it, while a bias field (Hb) is externally applied to the heated portion in the direction opposite the initialized direction. A coersivity Hc of the locally heated portion is decreased below the bias field (Hb). As a result, the direction of magnetization of that portion is aligned in the direction of the bias field (Hb). In this way, reversely magnetized bits are formed.

Ferromagnetic and ferrimagnetic materials differ in the temperature dependencies of the magnetization and Hc. Ferromagnetic materials have Hc which decreases around the Curie temperature and allow data recording based on this phenomenon. Thus, data recording in ferromagnetic materials is referred to as Tc recording (Curie temperature recording)

On the other hand, ferrimagnetic materials have a compensation temperature, below the Curie temperature, at which magnetization (M) becomes zero. The Hc abruptly increases around this temperature and hence abruptly decreases outside this temperature. The decreased Hc is cancelled by a relatively weak field (Hb).

Namely, recording is enabled. This process is called Tcomp. recording (compensation point recording).

In this case, however, there is no need to adhere to the Curie point or temperatures therearound, and the compensation temperature. In other words, if a bias field (Hb) capable of cancelling a decreased Hc is applied to a magnetic material having the decreased Hc at a predetermined temperature higher than a room temperature, recording is enabled.

<u>Principle of Reading</u>

Fig. 2 illustrates the principle of data reading based on the magnetooptical effect. Light is an electromagnetic wave with an electromagnetic-field vector normally emanating in all directions in a plane perpendicular to the light path. When light is converted to linearly polarized beams (Lp) and radiated onto a recording layer (1), it is reflected by or passed through the recording layer (1). At this time, the plane of polarization rotates according to the direction of magnetization (M). This phenomenon is called the magnetic Kerr effect or magnetic Faraday effect.

For example, if the plane of polarization of the reflected light rotates through $\theta_k$ degrees for "A-directed" magnetization, it rotates through $-\theta_k$ degrees for the "non-A-directed" magnetization. Therefore, when the axis of an optical analyzer (polarizer) is set perpendicular to the plane inclined at $-\theta_k$, the light reflected by "non-A-direction" magnetized bit ($B_0$) cannot pass through the analyzer. On the contrary, a product $(X \sin 2\theta_k)^2$ of the light reflected by a bit ($B_1$) magnetized along the "A direction" passes through the analyzer and becomes incident on a detector (Photoelectric conversion means). As a result, the bit ($B_1$) magnetized along the "A direction" looks brighter than the bit ($B_0$) magnetized along the "non-A-direction", and the detector produces a stronger electrical signal for the bit ($B_1$). The electrical signal from the detector is modulated in accordance with the recorded data, thus reading the data.

In order to reuse a recorded medium, (i) the medium is initialized again by an initialization apparatus, (ii) an erase head similar to a recording head is arranged in a recording apparatus, or (iii) recorded information is erased using a recording apparatus or an erasing apparatus in pre-processing.

Therefore, in a magnetooptical recording method, it has been considered to be impossible to perform an over-write operation capable of recording new information regardless of the presence/absence of recorded information.

If the direction of a bias field Hb can be desirably modulated between an "A direction" and a "non-A direction" as needed, the over-write operation can be performed. However, it is impossible to modulate the direction of the bias field Hb at high speed. For example, when the bias field Hb is applied by a permanent magnet, the direction of the magnet must be mechanically reversed. However, it is difficult to reverse the direction of the magnet at high speed. If the bias field Hb is applied by an electromagnet, the direction of a large-capacity current cannot be modulated at high speed.

However, along with advances in technologies, an over write capable magnetooptical recording method, an over write capable magnetooptical recording medium used therefor, and an over write capable recording apparatus used therefor have been proposed, filed, and disclosed as Japanese Laid-Open Patent Publication (Kokai) No. 62-175948. In this method, an intensity of light to be radiated is modulated in accordance with binary information to be recorded without turning on/off the bias field Hb or modulating the direction of the bias field Hb, thus allowing an over-write operation. This patent application corresponds to US Serial No. 870,350 filed on June 4, 1986 and to DE-A1-3619618.

The medium described in this known application has a multilayered structure consisting of a first layer as a recording layer having perpendicular magnetic anisotropy, and a second layer as a reference layer having perpendicular magnetic anisotropy. Only the second layer is magnetized in the "A direction" by an initial field Hini. prior to immediately before recording while the direction of magnetization of the first layer is left unchanged.

When a laser beam pulse-modulated between high level and low level in accordance with information is radiated onto a medium,

(1) in a state wherein a medium temperature is returned to room temperature by a high-level beam, a bit having a "non-A-directed" magnetization is formed in the second layer, and a bit having a "non-A-directed" magnetization (P type) or an "A-directed" magnetization (A type) is formed in the first layer depending on the type of medium, and

(2) in a state wherein the medium temperature is returned to room temperature by a low-level beam, a bit having an "A-directed" magnetization is formed in the second layer, and a bit having an "A-directed" magnetization (P type) or a "non-A-directed" magnetization (A type) is formed in the first layer depending on the type of medium.

In the over-write operation of the known application, only light is modulated in accordance with information to be recorded, and a bias field is not modulated. This is because it is difficult to modulate a magnetic field at high speed. More specifically, a laser beam used in recording is pulse-modulated in accordance with information to be recorded. However, this operation is also performed in conventional magnetooptical recording, and means for pulse-modulating a beam intensity in accordance with binary information to be recorded is known to those skilled in the art (e.g., THE BELL SYSTEM TECHNICAL JOURNAL, Vol. 62 (1983), 1923-1936).

One feature of the over-write operation of the known application is a medium used. This medium is a special one. That is, the medium has a multilayered structure consisting of a first layer having perpendicular magnetic anisotropy as a recording layer and a second layer having perpendicular magnetic anisotropy as a reference layer. The second layer is magnetized in the "A direction" by the initial field Hini. prior to immediately before recording while the direction of magnetization of the first layer is left unchanged.

Another feature of the over-write operation of the known application is high and low levels of a beam intensity. Assume that a laser beam pulse-modulated between high and low levels according to information is radiated on a medium.

(1) In a state wherein the medium temperature is increased to a high temperature $T_H$ by a high-level beam, the magnetizations of both the first and second layers almost or completely disappear. When the beam radiation is stopped and the medium temperature is decreased to be slightly lower than $T_H \approx T_{C2}$, the magnetization of the second layer appears.

In this case, the direction of magnetization of the second layer is aligned in the same direction as the bias field Hb. The aligned direction of magnetization of the second layer is left unchanged or is reversed when the medium temperature is returned to room temperature. In the latter case, a compensation temperature $T_{comp.2}$ is present before the medium temperature reaches the room temperature.

On the other hand, the magnetization of the first layer is controlled by the second layer.

As a result, at room temperature, a bit having a "non-A-directed" magnetization is formed in the second layer, and a bit having a "non-A-directed" magnetization (P type) or an "A-directed" magnetization (A type) is formed in the first layer depending on the type of medium.

(2) On the other hand, in a state wherein the medium temperature is increased to a low temperature $T_L$ by a low-level beam, the direction of magnetization of the second layer may be either the "A direction" = an initialized direction or the "non-A direction". In the latter case, a compensation temperature $T_{comp.2}$ is present before the medium temperature is increased to the low temperature $T_L$. In either case, magnetization is present in the second layer at $T_L$.

When the beam radiation is stopped and the medium temperature is decreased to be slightly lower than $T_L \approx T_{C1}$, the magnetization of the. first layer appears. The direction of magnetization of the first layer at this time is controlled by the second layer regardless of the direction of the bias field Hb. The second layer controls the direction of magnetization of the first layer through an interface wall energy.

As a result, at room temperature, a bit having an "A-directed" magnetization is formed in the second layer, and a bit having an "A-directed" magnetization (P type) or a "non-A-directed" magnetization (A type) is formed in the first layer depending on the type of medium.

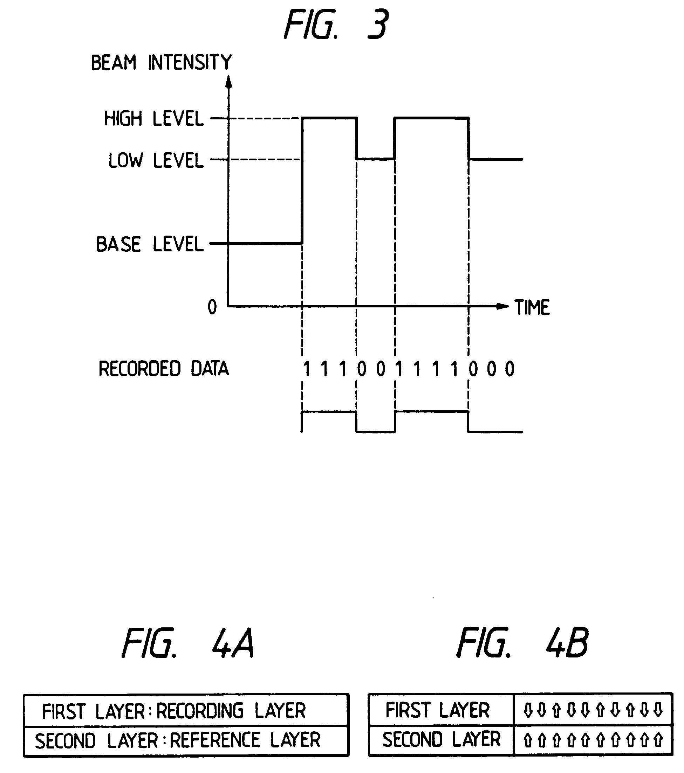

A beam is not a single beam but "two proximate beams". A first beam is turned on at low level and is not modulated in principle, thereby always forming a "non-A-directed (or "A-directed") bit, i.e., erasing previous information. A second beam is pulse-modulated between high level and base level (including zero level) equal to or lower than the low level in accordance with information, so that an "A-directed (or "non-A-directed") bit is formed to record information (Fig. 3).

In either case, if necessary high and low levels, and base level as needed are given, it is easy for those who are skilled in the art to modulate a beam intensity as described above by partially modifying a modulation means described in the above known application.

The invention of the prior application is divided into first and second aspects. In both the aspects, the recording medium has a multilayered structure, which is divided into two layers, as shown in Fig. 4A.

The first layer is the recording layer, which exhibits high coersivity at room temperature and has low reversing temperature. The second layer is the reference layer, which exhibits low coersivity at room temperature and has a higher reversing temperature than the first layer. Both the layers comprise perpendicular magnetic layers.

Note that each of the first and second layers may comprise a multilayered film.

In the first aspect, the coersivity of a first layer is represented by $H_{C1}$; that of a second layer $H_{C2}$; the Curie temperature of the first layer, $T_{C1}$; that of the second layer, $T_{C2}$; the room temperature, $T_R$; the temperature of the recording medium when a low level laser beam is radiated, $T_L$; that when a high level laser beam is radiated, $T_H$; a coupling field applied to the first layer, $H_{D1}$; and a coupling field applied to the second layer, $H_{D2}$. In this case, the recording medium satisfies the following Formula 1, and satisfies Formulas 2 to 5 at the room temperature.

$$T_R < T_{C1} = T_L < T_{C2} = T_H \tag{1}$$

$$H_{C1} > H_{C2} + |H_{D1} \mp H_{D2}| \tag{2}$$

$$H_{C1} > H_{D1} \tag{3}$$

$$H_{C2} > H_{D2} \tag{4}$$

$$H_{C2} + H_{D2} < |Hini.| < H_{C1} \pm H_{D1} \tag{5}$$

In the above formula, symbol "$\approx$" means "equal to" or "substantially equal to". In addition, of double signs $\pm$ and $\mp$, the upper sign corresponds to an A (antiparallel) type medium, and the lower sign corresponds to a P (parallel) type medium (these media will be described later). Note that the P type medium includes a ferromagnetic material and a magnetostatic coupling medium.

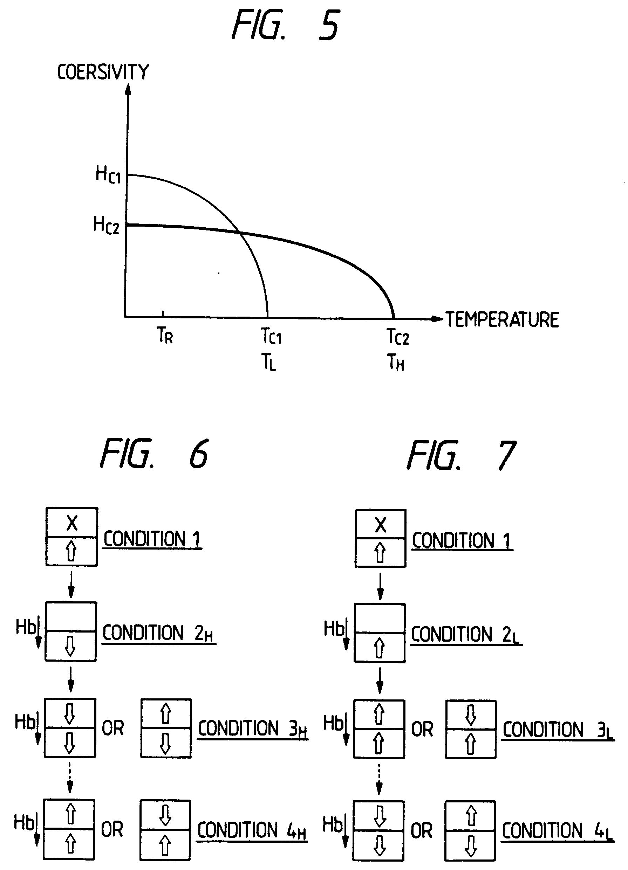

The relationship between the coersivity and the temperature is as shown in the graph of Fig. 5. Referring to Fig. 5. The thin curve represents the characteristics of the first layer and the bold curve represents those of the second layer.

Therefore, when an initial field (Hini.) is applied to the recording medium at room temperature, the direction of magnetization of the second layer is reversed without reversing that of the first layer, according to Formula 5. When the initial field (Hini.) is applied to the recording layer before recording, the second layer can be magnetized in the "A direction" (in the drawings, the "A direction" is indicated by an upward arrow, and the "non-A direction" is indicated by a downward arrow). If the initial field (Hini.) is decreased to zero, the direction of magnetization of the second layer can be left unchanged without being re-reversed, according to Formula 4.

Fig. 4B schematically shows a state wherein only the second layer is magnetized in the "A direction" immediately before recording.

Referring to Fig. 4B the direction of magnetization in the first layer represents previously recorded data. Since the direction of magnetization in the first layer 1 does not change the basic operation mechanism, it is indicated by X in the following description. The table in Fig. 4B is modified as shown in Condition 1 in Fig. 6 for the sake of simplicity.

In Condition 1, the high-level laser beam is radiated onto the recording medium to increase the medium temperature to $T_H$. Since $T_H$ is higher than the Curie temperature $T_{C1}$, magnetization of the first layer 1 disappears. In addition, since $T_H$ is near the Curie temperature $T_{C2}$, magnetization of the second layer 2 also disappears completely or almost completely. The bias field (Hb) in the "A direction" or "non-A direction" is applied to the medium in accordance with the type thereof. The bias field (Hb) can be stray field from the medium itself. For the sake of simplicity, assume that the bias field (Hb) in the "non-A direction" is applied to the medium. Since the medium is moving, a given irradiated portion is immediately separated from the laser beam and is cooled by air. When the temperature of the medium is decreased under the presence of the field Hb, the direction of magnetization of the second layer is reversed to the "non-A direction" based on the field Hb (Condition $2_H$ in Fig. 6).

When the medium is further cooled and the medium temperature is decreased below $T_{C1}$, magnetization of the first layer appears again. In this case, the direction of magnetization of the first layer is influenced by that of the second layer due to a magnetic coupling (exchange or magnetostatic coupling) force. As a result, "non-A directional"-magnetization (the P type medium) or "A directional" magnetization (the A type medium) is formed in accordance with the type of the medium, as shown in Condition $3_H$ in Fig. 6.

The condition $3_H$ is left unchanged or reversed depending on whether or not the compensation temperature $T_{comp.}$ is present before the medium temperature is decreased to room temperature. As a result, Condition $3_H$ may be changed to the next Condition $4_H$.

A change in condition due to high-level laser beam irradiation is called a high-temperature cycle herein.

Next, in Condition 1 in Fig. 7, the low-level laser beam is radiated onto the medium to increase the medium temperature to $T_L$. Since $T_L$ is near the Curie temperature $T_{C1}$, magnetization of the first layer disappears completely or almost completely. However, since $T_L$ is below the Curie temperature $T_{C2}$, magnetizatior of the second layer does not disappear (Condition $2_L$ in Fig. 7). In Condition $2_L$, although the bias field (Hb) is unnecessary, it cannot be turned on or off at high speed. Therefore, the bias field (Hb) is left applied inevitably.

However, since the coersivity $H_{C2}$ maintained high, the direction of magnetization of the second layer will not be reversed due to field Hb. Since the medium is moving, a given irradiated portion is immediately separated apart from the laser beam and is cooled by air. As cooling progresses, magnetization of the first layer appears. The direction of magnetization is influenced by that of the second layer due to the magnetic coupling force. As a result, "A directional" magnetization (the P type medium) or "non-A directional" magnetization (the A type medium) appears in accordance with the type of the medium. This magnetization is not changed even at the room temperature (Condition $3_L$ in Fig. 7).

This Condition $3_L$ is left unchanged or reversed depending on whether or not the compensation temperature $T_{comp.}$ is present before the medium temperature is decreased to room temperature. As a result, Condition $3_L$ may be changed to the next Condition $4_L$.

A change in condition due to low-level laser beam irradiation is called a low temperature cycle herein.

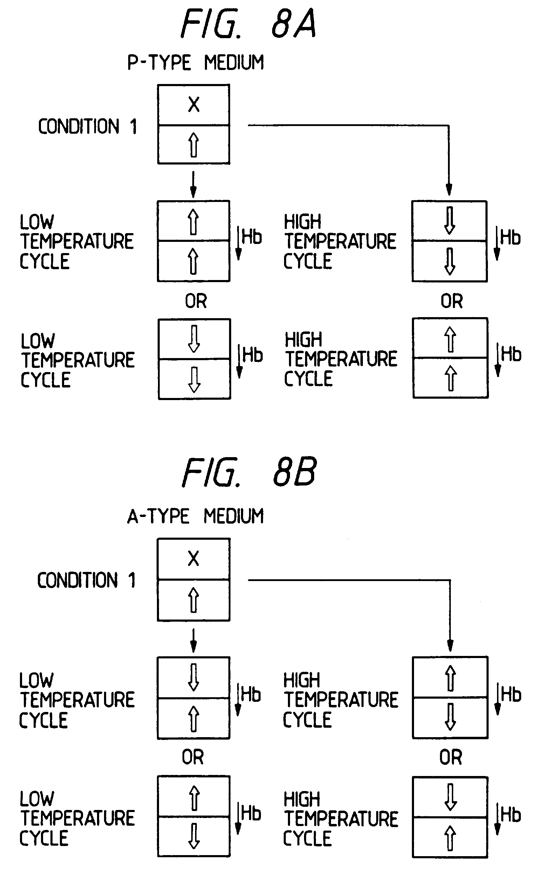

Figs. 8A, 8B summarize the above descriptions. Referring to Figs. 8A, 8B, bits, having either "A directional" magnetization or "non-A directional" magnetization, which are opposite to each other, are formed in the high- and low-temperature cycles regardless of the direction of magnetization in the first layer. More specifically, an over-write operation is enabled by pulse modulating the laser beam between high level (high-temperature cycle) and low level (low-temperature cycle) in accordance with data to be recorded.

Note that the recording medium normally has a disk shape, and is rotated during recording. For this reason, a recorded portion (bit) is again influenced by the initial field (Hini.) which is applied by initial field apply means during a single rotation. As a result, the direction of magnetization of the second layer is aligned along the original "A direction". However, at the room temperature magnetization of the first layer, and the recorded data can be held.

If linearly polarized light is radiated onto the first layer, since light reflected thereby includes data, data can be reproduced as in the conventional magnetooptical recording medium.

A perpendicular magnetic film constituting the first layer and the second layer is selected from the group consisting of (1) crystalline or amorphous ferromagnetic or ferrimagnetic materials having the Curie temperature and no compensation temperature, and (2) crystalline or amorphous ferrimagnetic materials having both the compensation temperature and the Curie temperature.

The first aspect utilizing the Curie temperature has been described. In contrast to this, the second aspect of the prior application utilizes decreased coersivity $H_C$ at a predetermined temperature exceeding the room temperature. The second aspect uses a temperature $T_{S1}$ at which the first layer is magnetically coupled to the second layer, in place of the temperature $T_{C1}$ in the first aspect. In addition, instead of the temperature $T_{C2}$, a temperature $T_{S2}$ at which the second layer is reversed under the influence of the field Hb is used. Thereby, the second aspect can provide the same effect as in the first aspect.

In the second aspect, the coersivity of the first layer is represented by $H_{C1}$: that of the second layer, $H_{C2}$; a temperature at which the first layer is magnetically coupled to the second layer, $T_{S1}$; a temperature at which the direction of magnetization of the second layer is reversed upon influence of the field Hb, $T_{S2}$; room temperature, $T_R$; a temperature of the medium when a low-level laser beam is applied thereto, $T_L$; a temperature of the medium when a high-level laser beam is applied thereto; $T_H$, a coupling field applied to the first layer, $H_{D1}$; and a coupling field applied to the second layer, $H_{D2}$. In this case, the recording medium satisfies the following Formula 6, and satisfies Formulas 7 to 10 at the room temperature.

$$T_R < T_{S1} = T_L < T_{S2} = T_H \tag{6}$$

$$H_{C1} > H_{C2} + |H_{D1} \mp H_{D2}| \tag{7}$$

$$H_{C1} > H_{D1} \tag{8}$$

$$H_{C2} > H_{D2} \tag{9}$$

$$H_{C2} + H_{D2} < |Hini.| < H_{C1} \pm H_{D1} \tag{10}$$

In the above formulas, upper signs of double signs $\pm$ and $\mp$ correspond to an A (antiparallel) type medium, and lower signs correspond to a P (parallel) type medium (these media will be descrbed later).

In the first and second aspects, the recording medium is constituted by the first and second layers, each of which preferably comprises an amorphous ferrimagnetic material selected from transition metal (e.g., Fe, Co) - heavy rare earth metal (e.g., Gd, Tb, Dy, and the like) alloy compositions.

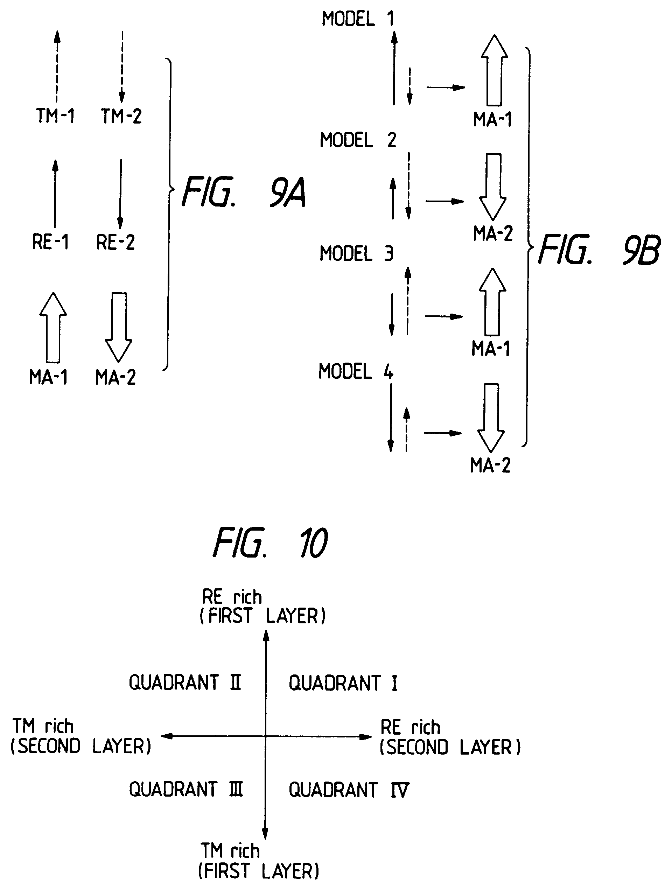

When the first and second layers are both selected from the transition metal - heavy rare earth metal alloy compositions, the direction and level of magnetization appearing outside the alloy are determined by the relationship between the direction and level of spin of transition metal atoms (to be referred to as TM hereinafter) and those of heavy rare earth metal atoms (to be referred to as RE hereinafter) inside the alloy. For example, as shown in Fig. 9A, the direction and level of TM spin are represented by a dotted vector TM-1, those of RE spin are indicated by a solid vector RE-1, and the direction and level of magnetization of the alloy as a whole are represented by a double-solid vector MA-1. In this case, the vector MA-1 is represented by a sum of vectors TM-1 and RE-1. However, in the alloy, the vectors TM and RE are directed in the opposite directions due to the mutual effect of the TM spin and the RE spin. Therefore, when these vectors are equal to each other, the sum of vectors TM-2 and RE-1 or the sum of vectors TM-2 and RE-1 is zero (i.e., the level of magnetization appearing outside the alloy is zero). The alloy composition making the sum of vectors zero is called a compensation composition. When the alloy has another composition, it has a strength equal to a difference between the strengths of both the spins, and has a vector (MA-1 or MA-2) having a direction equal to that of larger vector. Magnetization of this vector appears outside the alloy. For example, as shown in Fig. 9B, a pair of vectors correspond to a vector MA-1 (model 1), and a pair of vectors correspond to a vector MA-2 (model 2).

When one of the strength of the vectors of the RM spin and TM spin is larger than the other, the alloy composition is referred to as "XX rich" named after the larger spin name (e.g., RE rich).

The first and second layer can be classified into TM rich and RE rich compositions. Therefore, if the composition of the first layer is plotted along the ordinate and that of the second layer is plotted along the abscissa, the types of the recording media according to the present invention can be classified into four quadrants, as shown in Fig. 10. The P type medium described previously belongs to Quardrant I and III, and the A type medium belongs to Quadrant II and IV. Referring to Fig. 10, the intersection (origin) of the abscissa and the ordinate represents the compensation composition of both the layers.

In view of a change in coersivity against a change in temperatures, a certain alloy composition has characteristics wherein the coersivity temporarily increases infinitely and then abruptly decreases before a temperature reaches the Curie temperature (at which the coersivity is zero). The temperature corresponding to the infinite coersivity is called a compensation temperature (Tcomp.). No compensation temperature is present between the room temperature and the Curie temperature in the TM rich alloy composition. The compensation temperature below the room temperature is nonsense in the magnetooptical recording, and hence, it is assumed in this specification that the compensation temperature is present between the room temperature and the Curie temperature.

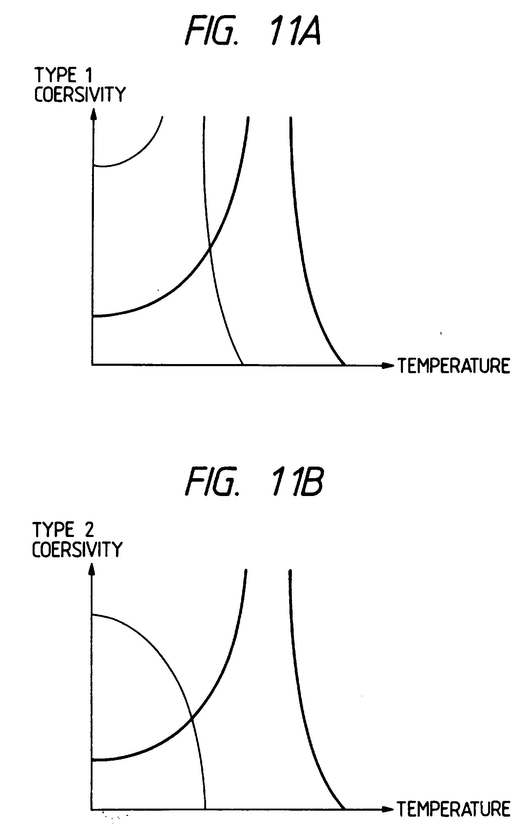

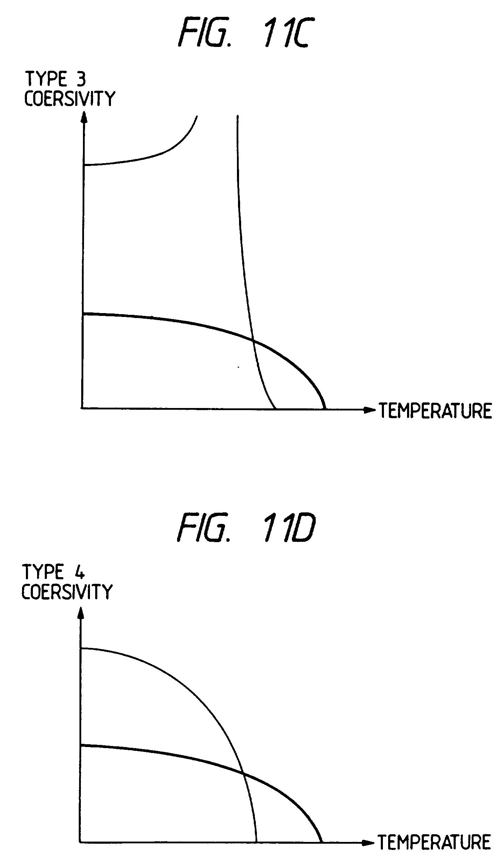

If the first and second layers are classified in view of the presence/absence of the compensation temperature, the recording medium can be classified into four types. The recording medium in Quadrant I includes all the four types of media. The graphs of Figs. 11A to 11D respectively show the relationship between the coersivity and the temperature of the four types of media. Note that thin curves represent characteristics of the first layer and bold curves represent those of second layer.

When the first (recording) layer and the second (reference) layer are classified in view of their RE or TM rich characteristics and in view of the presence/absence of the compensation temperature, they can be classified into 9 classes.

Table 1

| Class | Quadrant I | | Type |
|---|---|---|---|
| | First Layer: RE rich | Second Layer: RE rich | |
| 1 | Tcomp. | Tcomp. | 1 |
| 2 | No Tcomp. | Tcomp. | 2 |
| 3 | Tcomp. | No Tcomp. | 3 |
| 4 | No Tcomp. | No Tcomp. | 4 |
| Class | Quadrant II | | Type |
| | First Layer: RE rich | Second Layer: TM rich | |
| 5 | Tcomp. | No Tcomp. | 3 |
| 6 | No Tcomp. | No Tcomp. | 4 |
| Class | Quadrant III | | Type |
| | First Layer: TM rich | Second Layer: TM rich | |
| 7 | No Tcomp. | No Tcomp. | 4 |
| Class | Quadrant IV | | Type |
| | First Layer: TM rich | Second Layer: RE rich | |
| 8 | No Tcomp. | Tcomp. | 2 |
| 9 | No Tcomp. | No Tcomp. | 4 |

However, with the medium disclosed in detail in the known application, it is difficult to obtain an over write capable magnetooptical recording medium which has a high C/N ratio without decreasing recording sensitivity.

An invention for providing an over write capable magnetooptical recording with a high C/N ratio without decreasing recording sensitivity has been made and filed in a patent application on April 28, 1988 (Japanese Patent Application No. 63-105833 published on November 7, 1989). This application will be referred to as a "prior application" hereinafter.

A large difference between the medium disclosed in detail in the known application and the medium of the prior application is a low-temperature cycle.

In the former medium, magnetization of the first layer completely or almost disappears at the low temperature $T_L$. When the medium is moved relative to the beam and falls outside a beam spot region, the medium begins to be cooled.

When the medium temperature is decreased to be slightly lower than a Curie temperature $T_{C1}$ of the first layer, the magnetization of the first layer appears. In this case, the magnetization of the second layer influences the first layer through an interface wall energy $\sigma_w$. As a result, a magnetization in a stable direction with respect to that of the second layer appears in the first layer. More specifically, the magnetization appears in a parallel or antiparallel direction in accordance with the type of medium at that temperature. The direction of magnetization of the first layer is held even if the bias field Hb is positively or negatively applied.

In contrast to this, in the latter medium, weak magnetization is left in the first layer. However, in this case, a coercivity $H_{C1}$ of the first layer, the bias field Hb, and a magnetic field $= \sigma_w/2M_{S1}t_1$ influencing the first layer from the second layer through the interface wall energy $\sigma_w$ hold a specific relationship. In the specific relationship, the magnetization of the second layer aligns the magnetization of the first layer in a direction not to form a magnetic wall at an interface with the second layer (i.e., in a stable direction) regardless of the direction of the bias field Hb. More specifically, the magnetization of the first layer is forcibly aligned in a parallel or antiparallel direction in accordance with the type of medium at that temperature.

Thereafter, the former and latter media are cooled to room temperature. When the compensation temperature $T_{comp.}$ is present before the medium temperature reaches room temperature, the directions of magnetization of both the first and second layers are reversed.

However, a bit formed in the low-temperature cycle has the following magnetization at room temperature. More specifically, the second layer has a bit having an "A-directed" magnetization initialized by Hini. and the first layer has a bit having an "A-directed" or "non-A-directed" magnetization according to the type of medium.

Since the medium disclosed in the known application and the medium of the prior application comprise TbFeCo in the first layer (recording layer), an exchange coupling force between the two layers is increased. As a result, in order to stabilize the initial state of the second layer (reference layer), the film thickness $t_2$ must be increased, resulting in high manufacturing cost and a decrease in recording sensitivity of the medium.

More specifically, since an alloy composition used in the second layer is required to decrease an initial field Hini., the coersivity $H_{C2}$ must be decreased, and the product of the saturated magnetic moment $M_S$. In addition, since the coersivity $H_{C2}$ is small, the film thickness $t_2$ of the second layer must be increased so as to satisfy the following inequality as one over write condition:

$$t_2 > \frac{\sigma_w}{2M_{S2}H_{C2}}$$

For this purpose, it is found that the laser beam intensity must be increased to increase the medium temperature to the predetermined low temperature $T_L$ or high temperature $T_H$.

## SUMMARY OF THE INVENTION:

It would be desirable to provide an over write capable magnetooptical recording medium.

It would also be desirable to provide the recording medium which can decrease the film thickness of the second layer.

In order to solve the above problem, the present inventors made extensive studies about an alloy composition having a relatively small exchange coupling force between two layers, and found that a DyFeCo alloy or a TbDyFeCo alloy was such an alloy composition.

There is provided an over write capable magnetooptical recording medium,

which has a multi-layered structure comprising a first layer having a perpendicular magnetic anisotropy and serving as a recording layer, and a second layer having a perpendicular magnetic anisotropy and serving as a reference layer, and

which is capable of performing an over-write operation by only modulating a laser beam by the following system, wherein if one of upward and downward directions with respect to a layer surface is defined as an "A-direction", and the other is defined as "non-A direction",

only the direction of magnetization of the second layer is aligned in the "A-direction" by an initial field Hini. immediately before recording while the direction of magnetization of the first layer is left unchanged, and

when a laser beam which is modulated between high and low levels according to information is radiated on a medium, (1) if the beam is at high level, a medium temperature is increased to a high temperature $T_H$, and when a non-modulated bias field Hb is applied in this temperature state or when the non-modulated bias field Hb is applied while the medium temperature is decreased to a room temperature after the beam radiation is stopped,

a bit in which the second layer has a "non-A-directed" magnetization, and the first layer has a "non-A-directed" (or "A-directed") magnetization according to the type of medium is formed at a room temperature, and

(2) if the beam is at low level, the medium temperature is increased to a low temperature $T_L$, and in this temperature state,

(2-1) the magnetization of at least the second layer remains, and even if the non-modulated bias field Hb is applied positively (in a parallel direction) or negatively (in an anti-parallel direction) in this temperature state, the residual magnetization of the second layer acts, or

(2-2) even if the non-modulated bias field Hb is applied positively or negatively while the medium temperature is decreased to the room temperature after the beam radiation is stopped, the residual magnetization of the second layer acts,

so that a bit in which the second layer has the "A-directed" magnetization and the first layer has the "A-directed" (or "non-A-directed") magnetization according to the type of medium is formed at the room temperature,

characterized in that at least the first layer comprises an alloy composition selected from the group consisting of DyFeCo and TbDyFeCo.

According to the present invention, as defined by claim 1, of the DyFeCo alloys or TbDyFeCo alloys, the ratio of elements is selected as follows:

$$(Tb_U Dy_{100-U})_V (Fe_{100-W} Co_W)_{100-V}$$

(where 0 atomic % $\leq$ U < 60 atomic %

10 atomic % < V < 30 atomic %

5 atomic % < W < 40 atomic %)

The ratio is limited for the following reason.

When U exceeds 60 atomic %, the exchange coupling force $\sigma_w$ between two layers is undesirably increased.

When V falls outside the range of 10 to 30 atomic %, the coersivity $H_{C2}$ of the first layer is decreased, and stability of a recording mark is impaired.

When W is smaller than 5 atomic %, the Curie temperature becomes too low, and a read laser power margin is decreased with respect to an environmental temperature. On the contrary, when W is larger than 40 atomic %, the Curie temperature $T_{C1}$ becomes too high, resulting in an unstable L process. As a result, over-write characteristics are impaired.

The medium of an ambodiment of the present invention satisfies one of the following three relationships between the temperature characteristics of the first and second layers:

$$(i) \qquad T_R < T_{C1} \approx T_L < T_{C2} \approx T_H$$

$$(ii) \qquad T_R < T_L < T_{C1} < T_H \lesssim T_{C2}$$

$$(iii) \qquad T_R < T_L < T_H \lesssim T_{C1} \lesssim T_{C2}$$

where

| | |
|---|---|
| $T_R$: | room temperature |
| $T_{C1}$: | Curie temperature of first layer |
| $T_{C2}$: | Curie temperature of second layer |
| $T_L$: | temperature of recording medium when low-level laser beam is radiated |
| $T_H$: | temperature of recording medium when high-level laser beam is radiated |

When the medium (i) is heated to the low temperature $T_L$ in the low-temperature cycle, the magnetization of the first layer almost or completely disappears. On the other hand, the magnetization of the second layer remains. More specifically, the low-temperature cycle is the same as that of a medium disclosed in detail in the known application.

When the media (ii) and (iii) are heated to the low temperature $T_L$ in the low-temperature cycle, the magnetizations of both the first and second layers remain. Therefore, the low-temperature cycle is the same as that of the prior application.

In summary, a bit having the following magnetization is formed in any of the media (i), (ii), and (iii) in the low-temperature cycle. That is, a bit having an "A-directed" magnetization initialized by Hini. is formed in the second layer, and a bit having an "A-directed" (or "non-A-directed") magnetization is formed in the first layer depending on the type of medium.

On the other hand, a high-temperature cycle is as follows.

When the medium (i) is heated to the high temperature $T_H$, the magnetization of the first layer completely disappears, and the magnetization of the second layer almost or completely disappears.

When the medium is moved relative to the beam spot and falls outside a beam spot region, the medium begins to be cooled. When the medium temperature is decreased to be slightly lower than $T_{C2}$, the magnetization of the second layer appears. In this case, the direction of magnetization of the second layer is aligned in the same direction as the bias field Hb. In this case, the magnetization of the first layer is kept disappeared.

The medium is further cooled. When the medium temperature passes the compensation temperature $T_{comp.2}$ during a cooling process, the direction of the previously appeared magnetization of the second layer is reversed.

When the medium temperature is decreased to be slightly lower than $T_{C1}$, a magnetization of the first layer appears. In this case, the magnetization of the second layer influences the first layer through an interface wall energy. As a result, a magnetization in a stable direction which does not form a magnetic wall at an interface with the second layer appears in the first layer. More specifically, the magnetization parallel or antiparallel to that of the second layer appears in the first layer depending on the type of medium at that temperature.

The appeared magnetization of the first layer is held regardless of the direction of the bias field Hb.

The medium is kept cooled, and its temperature then reaches room temperature. When the medium temperature passes the compensation temperature $T_{comp.}$ during the cooling process, the direction of magnetization of the first or second layer is reversed.

As a result, a bit formed in the high-temperature cycle has the following magnetization at room temperature. More specifically, a bit formed in the second layer has a magnetization in a direction opposite to the "A direction" initialized by Hini., and a bit formed in the first layer has a magnetization in the "non-A direction" or "A direction" depending on the type of medium.

When the medium (ii) is heated to the high temperature $T_H$ in the high-temperature cycle, the magnetization of the first layer completely disappears. However, the magnetization of the second layer is classified into two states, i.e., (ii-1) the weak but clear magnetization remains and (ii-2) the magnetization almost or completely disappears. The medium (ii-1) exhibits the following high-temperature cycle. Since the coercivity at high temperature is weak, the direction of magnetization of the second layer obeys the bias field Hb and is aligned in the same direction as the bias field Hb. In this case, the magnetization of the first layer is kept disappeared.

When the medium is moved relative to the beam and falls outside a beam spot region, the medium begins to be cooled. When the medium temperature passes the compensation temperature $T_{comp.2}$ during a cooling process to room temperature, the direction of magnetization of the second layer obeying the field Hb is reversed.

When the medium temperature is decreased to be slightly lower than $T_{C1}$, the magnetization of the first layer appears. Thereafter, the same low-temperature cycle as that of the medium (i) is exhibited.

As a result, a bit formed in the high-temperature cycle has the following magnetization at room temperature. More specifically, a bit formed in the second layer has a magnetization in a direction opposite to the "A direction" initialized by Hini., and a bit formed in the first layer has a magnetization in the "non-A direction" or "A direction" depending on the type of medium.

The medium (ii-2) exhibits the same high-temperature cycle as that of the medium (i).

When the medium (iii) is heated to the high temperature $T_H$, its magnetization is classified into three states, i.e., (iii-1) the weak but clear magnetizations of both the first and second layers remain, (iii-2) the magnetization of the first layer almost or completely disappears and the weak but clear magnetization remains in the second layer, and (iii-3) the magnetizations of both the first and second layers almost or completely disappear.

The medium (iii-1) exhibits the following high-temperature cycle.

At the high temperature $T_H$, since the magnetizations left in the first and second layers are considerably weak, they obey the bias field Hb and are aligned in the same direction as the field Hb.

When the medium is moved relative to the beam and falls outside a beam spot region, the medium begins to be cooled.

As the medium is cooled, the magnetization $H_{C2}$ of the second layer is considerably increased relative to that of the first layer. For this reason, the magnetization of the second layer controls the direction of magnetization of the first layer through an interface wall energy. That is, the same phenomenon as that in the low-temperature cycle occurs.

The controlled magnetization of the first layer is held regardless of the direction of the bias field Hb.

The medium temperature is further decreased to room temperature. When the medium temperature passes the compensation temperature $T_{comp.2}$ during the cooling process, the directions of the magnetization of the second layer obeying Hb and the magnetization of the first layer controlled by the second layer are reversed.

However, after all, a bit formed in the high-temperature cycle has the following magnetization at room temperature. More specifically, a bit formed in the second layer has a magnetization in a direction opposite to the "A direction" initialized by Hini., and a bit formed in the first layer has a magnetization in the "non-A direction" or "A direction" depending on the type of medium.

The medium (iii-2) exhibits the following high-temperature cycle.

At the high temperature $T_H$, since the magnetization remaining in the second layer is considerably weak, it obeys the bias field Hb and is aligned in the same direction as the field Hb. In this case, the magnetization of the first layer is kept disappeared.

When the medium is moved relative to the beam and falls outside a beam spot region, the medium begins to be cooled.

When the medium temperature is decreased to be slightly lower than $T_{C1}$, the magnetization of the first layer appears. In this case, the magnetization of the second layer influences the first layer through an interface wall energy. For this reason, the magnetization of the first layer appears in a stable direction so as not to form a magnetic wall at an interface with the second layer. The magnetization of the second layer controls the direction of magnetization of the first layer. That is, the magnetization of the first layer is aligned parallel or or antiparallel to that of the second layer depending on the type (P or A type) of the medium at that temperature.

The appeared magnetization of the first layer is held regardless of the direction of the bias field Hb.

Thereafter, the medium is further cooled to room temperature. When the medium temperature passes the compensation temperature $T_{comp.2}$ during the cooling process, the directions of the magnetization of the second layer obeying Hb and the appeared magnetization of the first layer are reversed.

However, after all, a bit formed in the high-temperature cycle has the following magnetization at room temperature. More specifically, a bit formed in the second layer has a magnetization in a direction opposite to the "A direction" initialized by Hini., and a bit formed in the first layer has a magnetization in the "non-A direction" or "A direction" depending on the type of medium.

The medium (iii-3) exhibits the following high-temperature cycle.

At the high temperature $T_H$, the magnetizations of both the first and second layers almost or completely disappear.

When the medium is moved relative to the beam and falls outside a beam spot region, the medium begins to be cooled.

When the medium temperature is decreased to be slightly lower than $T_{C1}$ and $T_{C2}$, the magnetizations of the first and second layers appear. In this case, the directions of magnetization of the first and second layers obey the bias field Hb and are aligned in the same direction as the field Hb.

The medium is further cooled. As the medium is cooled, the magnetization $H_{C2}$ of the second layer is considerably increased relative to that of the first layer. For this reason, the magnetization of the second layer controls the direction of magnetization of the first layer through an interface wall energy. That is, the same phenomenon as that in the low-temperature cycle occurs.

The controlled magnetization of the first layer is held regardless of the direction of the bias field Hb.

The medium temperature is further decreased to room temperature. When the room temperature passes the compensation temperature $T_{comp.2}$ during the cooling process, the directions of the magnetization of the second layer obeying Hb and the magnetization of the first layer controlled by the second layer are reversed.

However, after all, a bit formed in the high-temperature cycle has the following magnetization at room temperature. More specifically, a bit formed in the second layer has a magnetization in a direction opposite to the "A direction" initialized by Hini., and a bit formed in the first layer has a magnetization in the "non-A direction" or "A direction" depending on the type of medium.

In this manner, an alloy composition allowing an over-write method in which only an intensity of a laser beam is modulated according to information without modulating the bias field Hb according to information satisfies the following four conditions at room temperature:

$$H_{C1} > H_{C2} + |H_{D1} \mp H_{D2}|$$

$$H_{C1} > H_{D1}$$

$$H_{C2} > H_{D2}$$

$$H_{C2} + H_{D2} < |Hini.| < H_{C1} \pm H_{D1}$$

where $H_{C1}$:     coersivity of first layer
$H_{C2}$:     coersivity of second layer
$H_{D1}$:     coupling field applied to first layer
$H_{D2}$:     coupling field applied to second layer
Hini.:     initial field

BRIEF DESCRIPTION OF THE DRAWINGS

Fig. 1 is an illustration for explaining a recording principle of a magnetooptical recording method;
Fig. 2 is an illustration for explaining a reading principle of the magnetooptical recording method;
Fig. 3 is a timing chart showing a laser beam intensity;
Fig. 4A is a diagram of a multilayered structure of a recording medium;
Fig. 4B is a diagram showing the direction of magnetization of a recording layer and a reference layer;
Fig. 5 is a graph showing the relationship between coersivity and temperature;
Fig. 6 illustrates changes in the direction of magnetization at high level;
Fig. 7 illustrates changes in the direction of magnetization at low level;
Figs. 8A and 8B illustrate flows of the changes in the direction of magnetization shown in Figs. 5 and 6 for respective P- and A-type media, respectively;
Figs. 9A and 9B are views for explaining various magnetic fields;
Fig. 10 is a map wherein the types of media of the present invention as classified into four quadrants;
Figs. 11A to 11D are graphs showing the relationship between the coersivity and the temperature repectively for media of Types I to IV;
Fig. 12 is a graph showing the relationship between the coersivity and the temperature for a medium No. 1;
Figs. 13 and 14 are diagrams showing changes in the direction of magnetization in high- and low-temperature cycles of a medium No. 1;
Fig. 15 is a graph showing the relationship between the coersivity and the temperature for the medium No. 4;
Figs. 16 and 17 are diagrams showing the changes in the direction of magnetization in high and low-temperature cycles of a medium No. 4;
Fig. 18 is a graph showing the relationship between the coersivity and the temperature for a medium No. 5;
Figs. 19 and 20 are diagrams showing the changes in the direction of magnetization in high- and low-temperature cycles of the medium No. 5;
Fig. 21 is a graph showing the relationship between the coersivity and the temperature for a medium No. 7;

Figs. 22 and 23 are diagrams showing the changes in the direction of magnetization in high- and low-temperature cycles of the medium No. 7;

Fig. 24 is a graph showing the relationship between the coersivity and the temperature for a medium No. 8;

Figs. 25 and 26 are diagrams showing the changes in the direction of magnetization in high- and low-temperature cycles of the medium No. 8;

Fig. 27 is a diagram of a multilayered structure of a recording medium according to the embodiment of the present invention;

Fig. 28 is a diagram showing the overall arrangement of a magnetooptical recording apparatus,

## PRINCIPLE OF THE OVER-WRITE OPERATION

The principle of the over-write operation will be described in detail below with reference to a specific medium belonging to Class 1 recording medium (P type, Quadrant I, type 1) shown in Table 1. The medium No. 1 satisfies formulas 11-1 and 11-2:

$$T_R < T\text{comp. } 1 < T_L < T_H \leq T_{C1} \leq T_{C2} \qquad (11\text{-}1)$$

$$T\text{comp. } 2 < T_{C1} \qquad (11\text{-}2)$$

For the sake of descriptive convenience, the following description will be made for $T_H < T_{C1} < T_{C2}$ and $T_L < T_{\text{comp.2}}$.

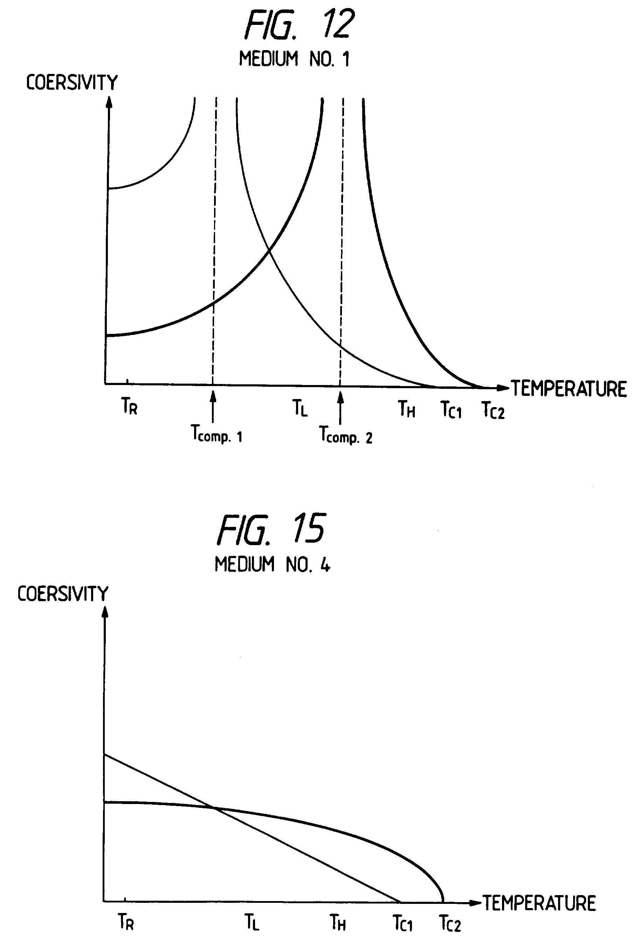

The graph of Fig. 12 shows this relation. Note that thin curve indicate the first layer, and bold curves indicate the second layer. Those identifications are same in the following graphs.

A condition that reverses the direction of magnetization of the second layer without reversing that of the first layer by the initial field (Hini.) at the room temperature $T_R$ is represented by Formula 12. The medium No. 1 satisfies Formula 12 at the $T_R$.

$$H_{C1} > H_{C2} + (\sigma_w/2M_{S1}t_1) + (\sigma_w/2M_{S2}t_2) \qquad \text{Formula 12}$$

where $H_{C1}$:    coersivity of first layer
$H_{C2}$:    coersivity of second layer
$M_{S1}$:    saturation magnetization of first layer
$M_{S2}$:    saturation magnetization of second layer
$t_1$:    film thickness of first layer
$t_2$:    film thickness of second layer
$\sigma_w$:    interface wall energy
         (Exchange coupling force)

At this time, a condition for the Hini. is represented by Formula 15. If the Hini. disappears, reversed magnetization of the first and second layers are influenced by each other due to the interface wall energy. The condition that wall energy. The condition that can hold the direction of magnetization of the second layer is represented by Formulas 13 and 14. The medium No. 1 satisfies Formulas 13 and 14.

$$H_{C1} > (\sigma_w/2M_{S1}t_1) \qquad \text{Formula 13}$$

$$H_{C2} > (\sigma_w/2M_{S2}t_2) \qquad \text{Formula 14}$$

$$H_{C2} + (\sigma_w/2M_{S2}t_2) < |\text{Hini.}| < H_{C1} - (\sigma_w/2M_{S1}t_1) \qquad \text{Formula 15}$$

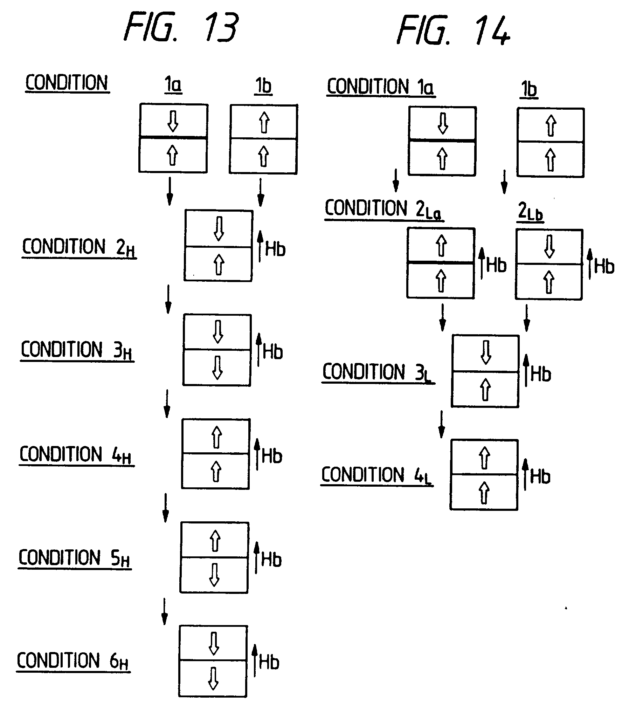

The layer 2's magnetization of the recording medium which can satisfy Formulas 12 to 14 at the $T_R$ is aligned along the "A direction" (model 1, in Fig. 9B) by the Hini. which satisfies Formula 15. At this time, the recording layer 1 is maintained in the recorded state (Condition 1a or 1b in Figs. 13 and 14).

Condition 1a or 1b is held to a point immediately before the recording. In this case, the bias field (Hb) is applied in the upward direction.

Note that it is difficult to focus the bias field Hb to the same range as the radiation region (spot region) of a laser beam like normal magnetic fields. When the medium is a disk-like medium, recorded information (bit) is influenced by Hini. during one revolution and is again set in Condition 1a or 1b. The bit passes a portion near a laser beam radiation region (spot region). In this case, the bit in Condition 1a or 1b is influenced by the bias field Hb since it approaches the bias field Hb applying means. In this case, if the direction of magnetization of the first layer of the bit in Condition 1a having a magnetization opposite to the direction of Hb is reversed by Hb, information which has been recorded one revolution before is erased. Formula defining a condition for preventing such erasure is given by:

$$H_{C1} > Hb + \frac{\sigma_w}{2M_{S1}t_1} \qquad (15\text{-}2)$$

This formula must be satisfied at room temperature. In other words, one condition for determining Hb is given by Formula 15-2.

The bit in Condition 1a or 1b then reaches the laser beam spot region. The laser beam intensity includes two levels, i.e., low level and high level as in the prior application.

--- Low-Temperature Cycle ---

A low-level laser beam is radiated, and a medium temperature is increased to be higher than $T_{comp.1}$. Thus, the medium type shifts from P type to A type. Although the directions of RE and TM spins of the first layer are left unchanged, the relationship between their intensities is reversed. As a result, the direction of magnetization of the first layer is reversed (Condition 1a → Condition 2La, Condition 1b → condition 2Lb in Fig. 14).

The laser beam radiation continues and the medium temperature then reaches $T_L$. The following relationship is established:

$$H_{C1} + Hb < \frac{\sigma_w}{2M_{S1}t_1}$$

Even if Hb is present, Condition 2La transits to Condition 3L. On the other hand, since Condition 2Lb is left unchanged even if Hb is present, it becomes Condition 3L.

In this state, when an irradiated portion falls outside the laser beam spot region, the medium temperature begins to decrease. When the medium temperature is decreased below $T_{comp.1}$, the medium type returns from A type to original P type. The relationship between RE and TM spins of the first layer is reversed (from model 2 to model 1 in Fig. 9B). As a result, the magnetization of the first layer is aligned in the "A direction" (Condition 4L).

Condition 4L is maintained after the medium temperature is decreased to room temperature.

As a result, an "A-directed" bit is formed in the first layer.

The high-temperature cycle will now be described with reference to Fig. 13.

--- High-Temperature Cycle ---

When the medium temperature is increased to $T_L$ via Tcomp. 1 upon irradiation of the high-level laser beam, Condition 1a or 1b change into Condition $2_H$.

When the laser-beam radiation further continues, the temperature of the medium increases accordingly. When the temperature of the medium slightly exceeds the temperature Tcomp. 2 of the second layer, the medium changes from A type to P type and the relationship between the strengths of the vectors is reversed (from the model 1 to the model 2) although the directions of the RE and TM spins remain the same. For this reason, the direction of magnetization of the second layer is reversed to be along the "non-A direction" (Condition $3_H$).

However, since the coersivity $H_{C2}$ is still high at this temperature, the direction of magnetization of the second layer will not be reversed by the field Hb. When the temperature further increases and reaches the temperature further increases and reaches the temperature $T_H$, the temperature of the first and second layers substantially corresponds to the Curie temperature and magnetization of the second layer also disappears (Condition $4_H$).

As a result, the medium satisfies one of the following Formulas (1) to (3):

$$(1) \qquad |H_{C1} - H_{C2}| < \frac{\sigma_w}{2M_{S1}t_1} + \frac{\sigma_w}{2M_{S2}t_2}$$

$$\text{and } Hb > \frac{M_{S1}t_1\,H_{C1} + M_{S2}t_2\,H_{C2}}{M_{S1}t_1 + M_{S2}t_2}$$

$$(2) \qquad Hb > H_{C1} + \frac{\sigma_w}{2M_{S1}t_1}$$

$$\text{and } Hb > H_{C2} - \frac{\sigma_w}{2M_{S2}t_2}$$

$$(3) \qquad Hb > H_{C1} - \frac{\sigma_w}{2M_{S1}t_1}$$

$$\text{and } Hb > H_{C2} + \frac{\sigma_w}{2M_{S2}t_2}$$

For this reason, the directions of magnetization of both the layers are reversed at almost the same time, and obey the direction of Hb. This state is Condition 4H.

It Condition $4_H$, when an irradiated portion is separated from the laser beam spot, the temperature of the medium begins to decrease. When the temperature of the medium decreases below the temperature Tcomp. 2, the medium changes from P type to A type and the relationship between the strengths of the vectors is reversed from the model 3 to the model 4. As a result, the direction of magnetization of the second layer is reversed from the "A direction" to the "non-A direction" (Condition $5_H$).

When the temperature of the medium further decreases below Tcomp. 1, the medium returns from A type to P type and the relationship between the strengths of the vectors is reversed from the model 3 to the model 4. As the result, the direction of magnetization of the first layer is reversed from the "A direction" to the "non-A direction" (Condition $6_H$).

Then, the temperature of the medium decreases from the temperature in condition $6_H$ to the room temperature. Since the coersivity $H_{C1}$ at the room temperature is sufficiently high (referring to Formula 15-3), Condition $6_H$ is maintained without reversing the direction of magnetization of the first layer by the field Hb. In this way, bit formation in the "non-A-direction" is completed.

$$Hb < H_{C1} + \frac{\sigma_w}{2M_{S1}t_1} \qquad (15\text{-}3)$$

The principle of the method of the present invention will be described in detail using a specific medium No. 4 belonging to Class 4 (P type, Quadrant I, Type 4) shown in Table 1.

The medium No. 4 satisfies Formula 26:

$$T_R < T_L < T_H \le T_{C1} \le T_{C2} \qquad (26)$$

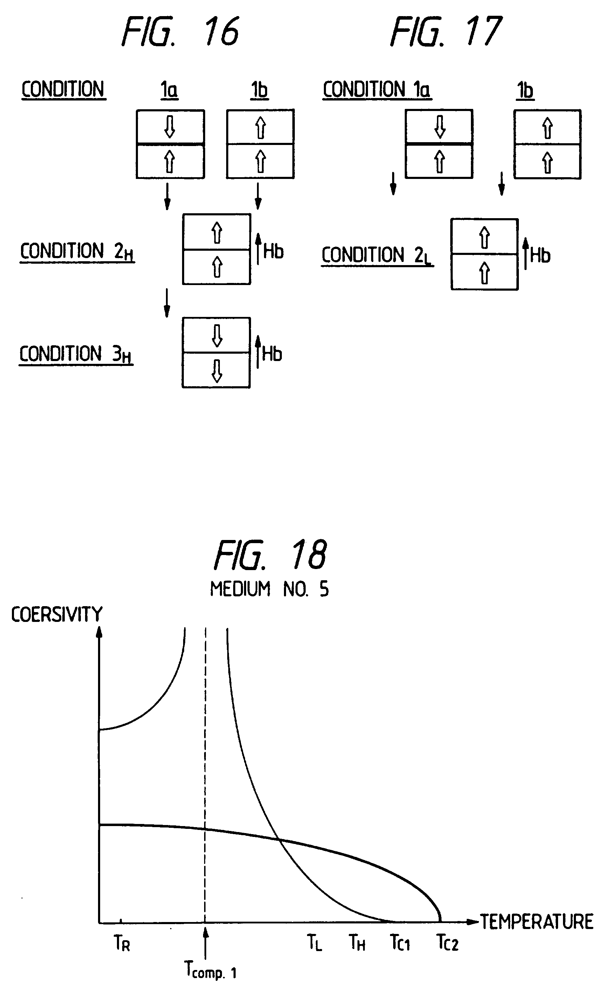

For the sake of simplicity, the following description will be made for $T_H < T_{C1} < T_{C2}$. The graph of Fig. 15 shows this relation.

A condition that reverses the direction of magnetization of the reference layer 2 without reversing that of the recording layer 1 by the initial field (Hini.) at the room temperature $T_R$ is represented by Formula 27. The medium No. 4 satisfies Formula 27 at the $T_R$:

$$H_{C1} > H_{C2} + (\sigma_w/2M_{S1}t_1) + (\sigma_w/2M_{S2}t_2) \qquad (27)$$

At this time, a condition for the Hini. is represented by Formula 30. If the Hini. disappears, reversed magnetization of the reference layers 1 and 2 are influenced by each other due to the interface wall energy. The condition that can hold the direction of magnetization of the layer 2 is represented by Formulas 28 and 29. The medium No. 4 satisfies Formulas 28 and 29.

$$H_{C1} > (\sigma_w/2M_{S1}t_1) \qquad (28)$$

$$H_{C2} > (\sigma_w/2M_{S2}t_2) \qquad (29)$$

$$H_{C2} + (\sigma_w/2M_{S2}t_2) < |Hini.| < H_{C1} - (\sigma_w/2M_{S1}t_1) \qquad (30\text{-}1)$$

The layer 2's magnetization of the recording medium which can satisfy Formulas 27 to 29 at the $T_R$ is aligned along the "A direction" by the Hini. which satisfies Formula 30-1. At this time, the recording layer 1 is maintained in the recorded state (Condition 1a or 1b in Figs. 16 and 17).

Condition 1a or 1b is held to a point immediately before the recording.

When the medium is a disk-like medium, a condition that can prevent a recorded bit (in particular, a bit in Condition 1b in which the direction of magnetization of the first layer is opposite to that of Hb) from being reversed when it approaches the Hb applying means is given by Formula 30-2:

$$Hb < H_{C1} + \frac{\sigma_w}{2M_{S1}t_1} \qquad (30\text{-}2)$$

The disk medium must satisfy this formula at room temperature. A condition that prevents the initialized second layer from being reversed when it approaches the Hb applying means is given by Formula 30-3:

$$Hb < H_{C2} - \frac{\sigma_w}{2M_{S2}t_2} \qquad (30\text{-}3)$$

In other words, one of conditions for determining Hb is given by Formulas 30-2 and 30-3.

--- Low-Temperature Cycle ---

A low-level laser beam is radiated, and the medium temperature is increased to $T_L$. Then, the following relationship is established:

$$H_{C1} + Hb < \frac{\sigma_w}{2M_{S1}t_1}$$

Condition 1a transits to Condition 2L. On the other hand, since Condition 1b is maintained, it becomes the same Condition 2L (see Fig. 17).

In Condition 2L, when an irradiated portion falls outside the laser beam spot region, the medium temperature begins to drop.

Even when the medium temperature is decreased to room temperature, Condition 2L is maintained since $H_{C1}$ at room temperature is sufficiently large (Formula 30-4).

$$Hb < H_{C1} + \frac{\sigma_w}{2M_{S1}t_1} \qquad (30\text{-}4)$$

As a result, an "A-directed" bit is formed in the first layer.

The high-temperature cycle will now be described with reference to Fig. 16.

--- High-Temperature Cycle ---

When the medium temperature is increased to $T_L$, upon irradiation of the high-level laser beam, Conditions la or 1b change into Condition $2_H$.

When the laser-beam radiation further continues and the medium temperature is equal to the temperature $T_H$, since the temperature $T_H$ reaches near Curie temperature of the first and second layer the coersivities of the both layers 1 and 2 are decreased. As a result, the directions of magnetization of both the layers are reversed as has been described in Condition $3_H$ of the medium No. 1 (Condition $3_H$)

In Condition $3_H$, when an irradiation portion is separated from the laser beam spot, the temperature of the medium begins to decrease.

Then, the temperature of the medium decreases until the room temperature. However, Condition $3_H$ is maintained. In this way, bit formation in the "non-A direction" is completed.

The principle of the method of the present invention will be described in detail using a specific medium No. 5 belonging to Class 5 (A type, Quadrant II, type 3) shown in Table 1.

The medium No. 5 satisfies Formula 31:

$$T_R < T\text{comp. } 1 < T_L < T_H \leq T_{C1} \leq T_{C2} \qquad (31)$$

For the sake of simplicity, the following description will be made for $T_H < T_{C1} < T_{C2}$. The graph of Fig. 18 shows this relation.

A condition that reverse the direction of magnetization of the reference layer 2 without reversing that of the recording layer 1 by the initial field (Hini.) at the room temperature $T_R$ is represented by Formula 32. The medium No. 5 satisfies Formula 32 at the $T_R$:

$$H_{C1} > H_{C2} + |(\sigma_w/2M_{S1}t_1) - (\sigma_w/2M_{S2}t_2)| \qquad (32)$$

At this time, a condition for the Hini. is represented by Formula 35. If the Hini. disappears, reversed magnetization of the reference layers 1 and 2 are influenced by each other due to the interface wall energy. The condition that can hold the direction of magnetization of the layer 2 is represented by Formulas 33 and 34. The medium No. 5-2 satisfies Formulas 33 and 34.

$$H_{C1} > (\sigma_w/2M_{S1}t_1) \qquad (33)$$

$$H_{C2} > (\sigma_w/2M_{S2}t_2) \qquad (34)$$

$$H_{C2} + (\sigma_w/2M_{S2}t_2) < |Hini.| < H_{C1} + (\sigma_w/2M_{S1}t_1) \qquad (35)$$

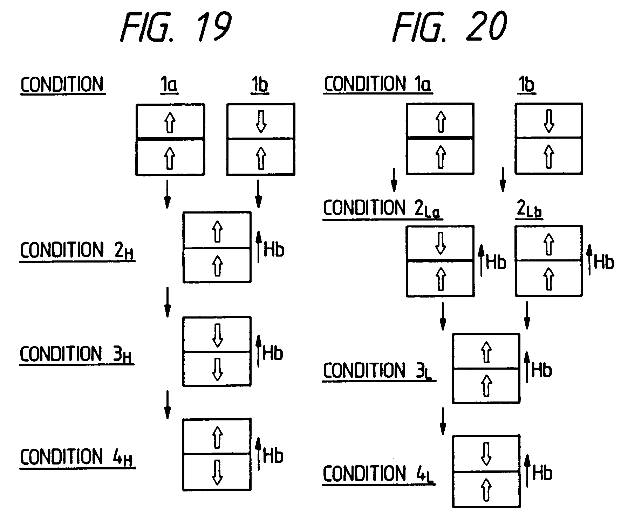

The layer 2's magnetization of the recording medium which can satisfy Formulas 32 to 34 at the $T_R$ is aligned along the "A direction" by the Hini. which satisfies Formula 35. At this time, the recording layer 1 is maintained in the recorded state (Condition 1a or 1b in Figs. 19 and 20).

Condition 1 is held to a point immediately before the recording. In this case, the bias field (Hb) is applied in the downward direction.

When the medium is a disk-like medium, a condition that can prevent a recorded bit (in particular, a bit in Condition la in which the direction of magnetization of the first layer is opposite to that of Hb) from being reversed when it approaches the Hb applying means is given by Formula 35-2:

$$Hb < H_{C1} - \frac{\sigma_w}{2M_{S1}t_1} \qquad (35\text{-}2)$$

The disk medium must satisfy this formula at room temperature. A condition that prevents the initialized second layer from being reversed when it approaches the Hb applying means is given by Formula 35-3:

$$Hb < H_{C2} - \frac{\sigma_w}{2M_{S2}t_2} \qquad (35\text{-}3)$$

In other words, one of conditions for determining Hb is given by Formulas 35-2 and 35-3.

The low-temperature cycle will be described with reference to Fig. 20.

--- Low-Temperature Cycle ---

In Condition 1a or 1b immediately before recording, the medium temperature increases and exceeds Tcomp. 1 upon irradiation of the low-level laser beam. The relationship between the strength of the vectors in reversed although the directions of the RE and TM spins of the first layer remain the same. As a result the magnetization of the first layer is reversed (Condition 1a → Condition 2La, Condition 1b → Condition 2Lb). In this Condition the P type medium is temporarily formed.

When the medium temperature is further increased from this state and reaches $T_L$, the following relationship is established:

$$H_{C1} + Hb < \frac{\sigma_w}{2M_{S1}t_1}$$

Condition 2La transits to Condition 3L. On the other hand, since Condition 2Lb is maintained, it becomes the same Condition 3L.

In Condition 3L, when an irradiated portion is separated from the laser beam spot, the medium temperature begins to fall. When the medium temperature is below the temperature Tcomp. 1, the relationship between the strengths of the vectors of the RE and TM spins of the first layer is reversed (from the model 3 to the model 4, in Fig. 9B).

As a result, magnetization of the first layer is the "non-A direction" (Condition 4L). In this condition, the medium returns A type.

Condition 4L is maintained even if the medium temperature is decreased to the room temperature. In this way, bit formation in the "non-A direction" is completed.

The high-temperature cycle will now be described with reference to Fig. 19.

--- High-Temperature Cycle ---

When the medium temperature is increased to $T_L$ upon irradiation of the high-level laser beam, Condition $2_H$ is appeared.

When the laser-beam radiation further continues and the medium temperature is equal to the temperature $T_H$, since the temperature $T_H$ of the layer 2 reaches near the Curie temperatures $T_{C1}$ and $T_{C2}$, coersivities of the both layers 1 and 2 are decreased. As a result, the directions of magnetization of both the layers are reversed as has been described in Condition $3_H$ of the medium No. 1 (Condition $3_H$).

In Condition $3_H$, when an irradiated portion is separated from the laser beam spot, the temperature of the medium begins to decrease.

When the medium temperature is decreased below the temperature Tcomp. 1, the medium returns to A type from P type and the relationship between the strengths of the TM and RE spins of the layer 1 is reversed. For this reason, magnetization of the layer 1 is reversed to the "A-direction" (Condition $4_H$).

Then, the temperature of the medium decreases from the temperature in Condition $4_H$ to the room temperature is sufficiently high, magnetization of the layer 1 is stably maintained. In this way, bit formation in the "A direction" is completed.

The principle of the method of the present invention will be described in detail using a specific medium No. 7 belonging to Class 7 (P type, Quadrant III, Type 4) shown in Table 1.

The medium 7 satisfies Formula 41:

$$T_R < T_L < T_H \leq T_{C1} \leq T_{C2} \tag{41}$$

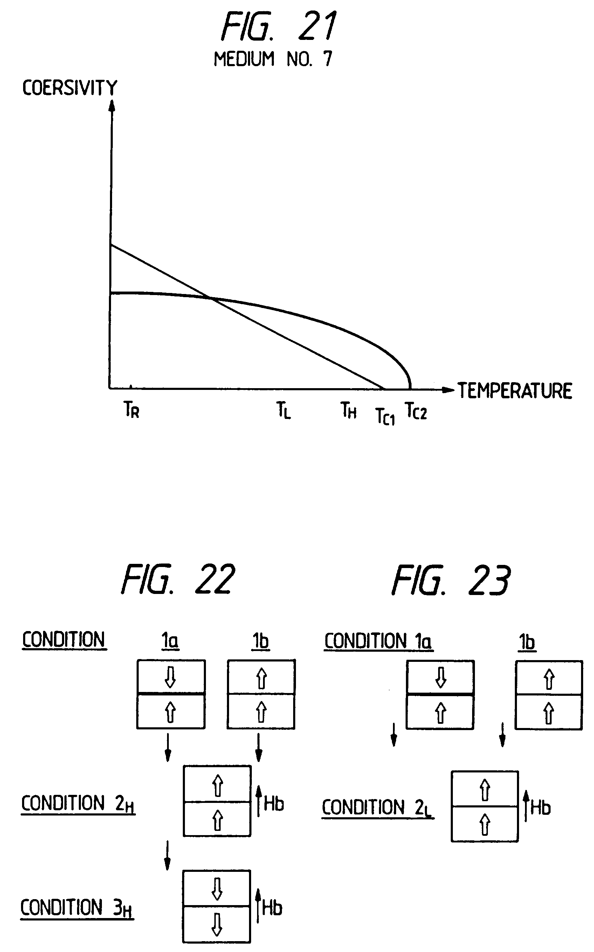

For the sake of simplicity, the following description will be made for $T_H < T_{C1} < T_{C2}$. The graph of Fig. 21 shows this relation.

A condition that reverses the direction of magnetization of the reference layer 2 without reversing that of the recording layer 1 by the initial field (Hini.) at the room temperature $T_R$ is represented by Formula 42. The medium No. 7 satisfies Formula 42 at the $T_R$:

$$H_{C1} > H_{C2} + (\sigma_w/2M_{S1}t_1) + (\sigma_w/2M_{S2}t_2) \tag{42}$$

At this time, a condition for the Hini. is represented by Formula 45. If the Hini. disappears, reversed magnetization of the reference layer 2 is influenced by magnetiation of the recording layer 1 due to an exchange coupling force. The condition that can hold the direction of magnetization of the layer 2 is represented by Formulas 43 and 44. The medium No. 7 satisfies Formulas 43 and 44.

$$H_{C1} > (\sigma_w/2M_{S1}t_1) \tag{43}$$

$$H_{C2} > (\sigma_w/2M_{S2}t_2) \tag{44}$$

$$H_{C2} + (\sigma_w/2M_{S2}t_2) < |Hini.| < H_{C1} - (\sigma_w/2M_{S1}t_1) \tag{45}$$

The layer 2's magnetization of the recording medium which can satisfy Formulas 42 to 44 at the $T_R$ is aligned along the "A direction" by the Hini. which satisfies Formula 45. At this time, the recording layer 1 is maintained in the recorded state (Condition 1a or 1b in Figs. 22 and 23).

Condition 1a or 1b is held to a point immediately before the recording. In this case, the bias field (Hb) is applied in the downward direction.

Note that in this medium No. 7, conditions represented by the above Formulas 30-2 and 30-3 are quoted.

The high-temperature cycle will now be described with reference to Fig. 22.

--- High-Temperature Cycle ---

In Condition 1a or 1b, when the medium temperature is increased to $T_L$ upon irradiation of the high-level laser beam, Condition $2_H$ appears.

When the laser-beam radiation continues and the medium temperature is equal to the temperature $T_H$, since the temperature $T_H$ of the layer 2 reaches near the Curie temperature $T_{C1}$ and $T_{C2}$, the medium satisfies one of formulas (1) - (3), shown in the medium No. 1. This state is Condition $3_H$.

In Condition $3_H$, when an irradiated portion is separated from the laser beam spot, the temperature of the medium begins to decrease.

Then, the temperature of the medium decreases from the temperature in Condition $3_H$ to the room temperature. Since the coersivity $H_{C1}$ at the room temperature is sufficiently high, magnetization of the layer 1 is stably maintained. In this way, bit formation in the "non-A direction" is completed.

The low-temperature cycle is shown in Fig. 23.

Since this cycle is the same as that in the medium No. 4, a description thereof will be omitted.

The principle of the method of the present invention will be described in detail using a specific medium No. 8 belonging to Class 8 (A type, Quadrant IV, Type 2) shown in Table 1.

The medium No. 8 satisfies Formula 46:

$$T_R < T_L < T_H \leq T_{C1} \leq T_{C2} \tag{46}$$

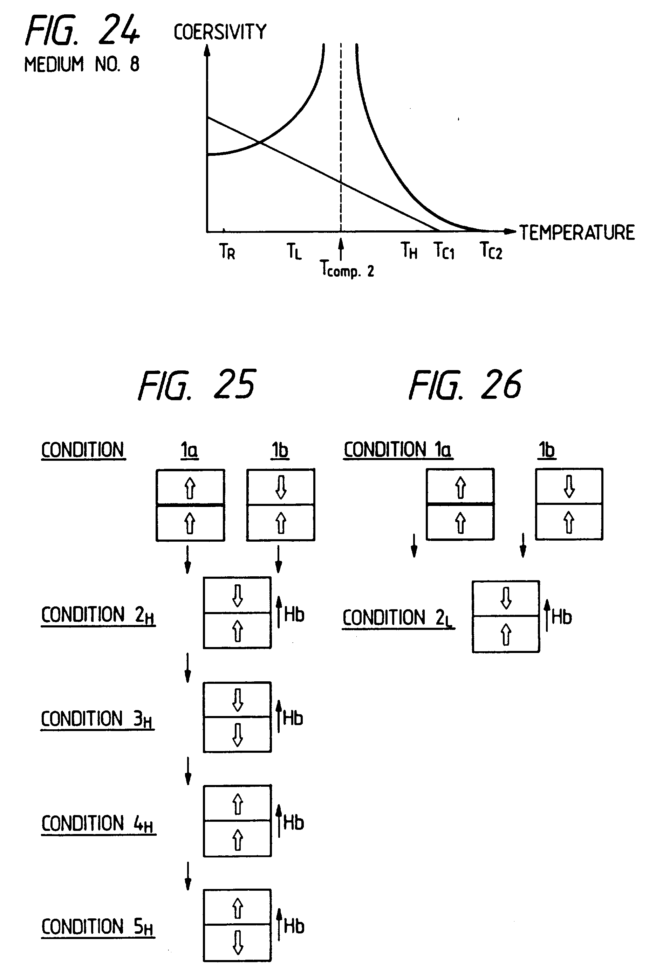

The following description will be made for $T_H < T_{C1} < T_{C2}$ and $T_L < T_{C1} < T_{comp.2}$. The graph of Fig. 24 shows this relation.

A condition that reverses the direction of magnetization of the reference layer 2 without reversing that of the recording layer 1 by the initial field (Hini.) at the room temperature $T_R$ is represented by Formula 47. The medium No. 8 satisfies Formula 47 at the $T_R$.

$$H_{C1} > H_{C2} + |(\sigma_w/2M_{S1}t_1) - (\sigma_w/2M_{S2}t_2)| \tag{47}$$

At this time, a condition for the Hini. is represented by Formula 50. If the Hini. disappears, reversed magnetization of the reference layer 2 is influenced by magnetization of the recording layer 1 due to the interface wall energy. The condition that can hold the direction of magnetization of the layer 2 is represented by Formulas 48 and 49. The medium No. 8 satisfies Formulas 48 and 49.

$$H_{C1} > (\sigma_w/2M_{S1}t_1) \tag{48}$$

$$H_{C2} > (\sigma_w/2M_{S2}t_2) \tag{49}$$

$$H_{C2} + (\sigma_w/2M_{S2}t_2) < |Hini.| < H_{C1} + (\sigma_w/2M_{S1}t_1) \tag{50}$$

The layer 2's magnetization of the recording medium which can satisfy Formulas 47 to 49 at the $T_R$ is aligned along the "A direction" by the Hini. Which satisfies Formula 50. At this time the recording layer 1 is maintained in the recorded state (Condition 1a or 1b in Figs. 25 and 26).

Condition 1 is held to a point immediately before the recording. In this case, the bias filed (Hb) is applied in the upward direction.

When the medium is a disk-like medium, a condition that can prevent a recorded bit (in particular, a bit in Condition 1b in which the direction of magnetization of the first layer is opposite to that of Hb) from being reversed when it approaches the Hb applying means is given by Formula 50-2:

$$Hb < H_{C1} + \frac{\sigma_w}{2M_{S1}t_1} \tag{50-2}$$

The disk medium must satisfy this formula at room temperature. In other words, one of conditions for determining Hb is given by Formula 50-2.

A bit in Condition la or 1b then reaches the laser beam spot region.

The low-temperature cycle will now be described with reference to Fig. 26.

--- Low-Temperature Cycle ---

A low-level laser beam is radiated, and the medium temperature is increased to $T_L$. Then, the following formula is satisfied:

$$H_{C1} + Hb < \frac{\sigma_w}{2M_{S1}t_1}$$

Condition 1a transits to Condition 2L. On the other hand, since Condition 1b is maintained, it also becomes the Condition 2L.

In Condition 2L, when an irradiated portion falls outside the laser beam spot region, the medium temperature begins to drop. Even when the medium temperature is decreased to room temperature, Condition 2L is maintained since $H_{C1}$ at room temperature is sufficiently large (Formula 50-2).

As a result, a "non-A-directed" bit is formed in the first layer.

The high-temperature cycle will now be described with reference to Fig. 25.

--- High-Temperature Cycle ---

In Condition 1a or 1b when the medium temperature is increased $T_L$ upon irradiation of the high-level laser beam, Condition $2_H$ appears.

When the laser-beam radiation continues and the medium temperature is slightly higher than the temperature Tcomp. 2, the medium changes from A type into P type and the relationship between the strengths of the RE and TM spins is reversed although the directions thereof remain the same. As a result, the direction of the magnetization of the layer 2 is reversed to "non-A direction". This state is Condition $3_H$.

At this temperature, however, since the coersivity $H_{C2}$ is yet high, magnetization of the layer 2 will not be reversed by the bias field Hb. Assume that the laser-beam radiation further continues and the medium temperature is increased to $T_H$. Since the temperature $T_H$ reaches near the temperature $T_{C2}$, coersivities of both layers 1 and 2 decreases and the medium shown in the medium No. 1 satisfies one of formulas (1) - ( 3). This state is Condition $4_H$.

In Condition $4_H$, when an irradiated portion is separated from the laser beam spot, the temperature of the medium begins to decrease and the medium returns into A type from P type.

And then, the relationship between the strength of the RE and TM spins is reversed without reversing the directions thereof. As a result, the direction of magnetization of the layer 2 is reversed to "non-A direction". In this state, since the coersivity $H_{C2}$ is already sufficiently high, magnetization of the layer 2 will not be reversed by the bias field Hb. This state is Condition $5_H$.

Then, the temperature of the medium decreases from the temperature in Condition $5_H$ to the room temperature. Since the coersivity $H_{C1}$ at the room temperature is sufficiently high, magnetization of the layer 1 is stably maintained. In this way, bit formation in the "A direction" is completed

The present invention will be described in more detail below by way of its examples and comparative examples. However, the present invention is not limited to these examples.

(Example 1)

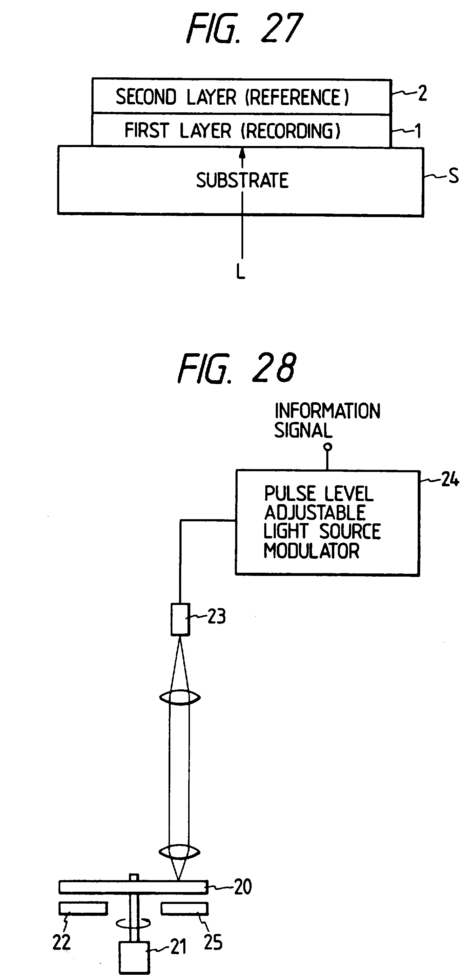

A 3-source RF magnetron sputtering apparatus was used, and a disk-like glass substrate S having a thickness of 1.2 mm and a diameter of 130 mm shown in Fig. 27 was set in a vacuum chamber of the apparatus.

After the interior of the vacuum chamber was evacuated to $2.7 \times 10^{-5}$ $Nm^{-2}$ ($2 \times 10^{-7}$ Torr), an argon gas was introduced, and sputtering was performed at a film formation rate of about 0.5 nm $S^{-1}$ (5 Å/sec) while maintaining the Ar gas pressure to be 0.4 $Nm^{-2}$ ($3 \times 10^{-3}$ Torr).

As a first target, a TbDyFeCo alloy was used, and a first layer (recording layer) 1 consisting of a $(Tb_{40}Dy_{60})_{27}$ $(Fe_{83}Co_{17})_{73}$ perpendicular magnetic film having a film thickness $t_1 = 60$ nm (600 Å) was formed on the substrate. Note that the unit of suffixes in the alloy composition is atomic %. This also applies to the following description.

Subsequently, simultaneous sputtering was performed using TbDyFeCo alloy as targets while maintaining the vacuum state. Thus, a second layer (reference layer) 2 consisting of a $(Tb_{40}Dy_{60})_{27}(Fe_{70}Co_{30})_{73}$ perpendicular magnetic film having a film thickness $t_2 = 70$ nm (700 Å) was formed on the first layer.

Table 2 below summarizes magnetic characteristics (25°C) of a two-layered magnetooptical recording medium thus manufactured and belonging to Class 8 (A type, Quadrant IV, Type 2).

Table 2

|  | First Layer | Second Layer |
|---|---|---|
| Composition | $(Tb_{40}Dy_{60})_{27}(Fe_{83}Co_{17})_{73}$ | $(Tb_{40}Dy_{60})_{27}(Fe_{70}Co_{30})_{73}$ |
| Film Thickness (Å) | 600 | 700 |
| Ms (emu/cc) | 35 | 120 |
| Hc ($O_e$) | 10,000 | 2,500 |
| Tc (°C) | 210 | 300 |
| $T_{comp.}$ (°C) | None | 120 |
| $\sigma_w$ (erg/cm$^2$) | 3.7 | |

(Comparative Example)

After a first layer consisting of a $Tb_{21}Fe_{70}Co_9$ perpendicular magnetic film having a film thickness $t_1 = 600$ Å was formed using a TbFeCo alloy as a target following the same procedures as in Example 1, a second layer consisting of a $(Tb_{40}Dy_{60})_{27}(Fe_{70}Co_{30})_{73}$ perpendicular magnetic film having a film thickness $t_2 = 900$ Å was formed using a TbDyFeCo alloy as a target while maintaing the vacuum state on the first layer.

Table 3 below summarizes magnetic characteristics (25 °C) of a two-layered magnetooptical recording medium thus manufactured and belonging to Class 8 (A type, Quadrant IV, type 2).

## Table 3

* 1    $Tb_{21} Fe_{70}Co_9$

* 2    $(Tb_{40}Dy_{60})_{27}(Fe_{70}Co_{30})_{73}$

| | First Layer | Second Layer |
|---|---|---|
| Composition | * 1 | * 2 |
| Film Thickness (Å) | 600 | 900 |
| $Ms$ (emu/cc) | 50 | 120 |
| $Hc$ (O.) | 10,000 | 2,500 |
| $Tc$ (°C) | 215 | 300 |
| $T_{comp.}$ (°C) | None | 120 |
| $\sigma_w$ (erg/cm²) | 5.3 | |

[Evaluation of Medium]

(1) Calculation of minimum film thicknesses $t_1$ and $t_2$ of first and second layers:

When the second layer is initialized by Hini. at a room temperature and the direction of magnetization is aligned in the "A-direction" or "non-A direction", for the Class 8 medium, conditions for maintaining the directions of magnetization of the first and second layers are expressed as follows:

$$H_{C1} > \frac{\sigma_w}{2M_{S1}t_1}, \ H_{C2} > \frac{\sigma_w}{2M_{S2}t_2}$$

If these inequalities are solved for the film thicknesses $t_1$ and $t_2$, they are rewritten as:

$$t_1 > \frac{\sigma_w}{2M_{S1}H_{C1}}, \ t_2 > \frac{\sigma_w}{2M_{S2}H_{C2}}$$

For media of the above examples and comparative examples, the minimum film thicknesses $t_1$ and $t_2$ necessary for the first and second layers were calculated. The calculation results are summarized in Table 4 below. Note that Table 4 also shows the C/N ratio which was separately measured for the media of the examples and comparative examples.

Table 4

| | MINIMUM FILM THICKNESS $t_1$ | MINIMUM FILM THICKNESS $t_2$ | C/N RATIO (dB) |
|---|---|---|---|
| | | | [unit: Å] |
| EXAMPLE TbDyFeCo/TbDyFeCo | 530 | 620 | 59 |

Continuation of the Table on the next page

Table 4   (continued)

| | | | [unit: Å] |
|---|---|---|---|
| | MINIMUM FILM THICKNESS $t_1$ | MINIMUM FILM THICKNESS $t_2$ | C/N RATIO (dB) |
| COMPARATIVE EXAMPLE TbFeCo/TbDyFeCo | 530 | 880 | 59 |

(2) C/N Ratio:

(Description of Over Write Capable Magnetooptical Recording Apparatus)

This apparatus is exclusively used for recording, and its overall arrangement is shown in Fig. 28.
This apparatus basically comprises:

an electric motor 21 for rotating a recording medium 20;
a device 22 for applying an initial field Hini.;
a laser beam light source 23;
a modulator 24 for pulse-modulating a beam intensity in accordance with binary information to be recorded between (1) high level giving a medium temperature $T_H$ suitable for forming one of a bit having an upward magnetization and a bit having a downward magnetization and (2) low level giving a medium temperature $T_L$ suitable for forming the other bit; and
a device 25 for applying a bias field Hb.

As the Hini. applying device 22, permanent magnets which generate an "A-directed" magnetic field and respectively have an intensity of:

| Medium of Example: | 5,000 Oe |
|---|---|
| Medium of Comparative Example: | 5,000 Oe |

are used according to the types of medium. As the Hb applying device 25, a permanent magnet which has an intensity of 300 Oe and generates an "A-directed" magnetic field is used.

The permanent magnets 22 and 25 are rod-like ones each having a length corresponding to the radius of the disk-like recording medium 20. The magnets 22 and 25 are fixed to the recording apparatus, and are not moved together with a pickup including the light source 23.

(Measurement of C/N Ratio)

Magnetooptical recording was carried out using the recording apparatus shown in Fig. 28. The medium 20 of one of the examples and comparative examples described above was rotated by the motor 21 at a linear velocity of 12 m/sec. A laser beam was radiated on the medium 20. The beam intensity can be adjusted by the modulator 24, and was set as shown in Table 5 according to the types of medium.

Table 5

| Medium | Beam Intensity (on disk) | |
|---|---|---|
| | Low Level | High Level |
| Example | 4.1 mW | 10.0 mW |
| Comparative Example | 4.8 mW | 11.5 mW |

The beam was pulse-modulated by the modulator 24 in accordance with information. In this case, information to be recorded is a signal at a frequency of 1 MHz. Therefore, the beam was radiated on the medium 20 while being modulated at that frequency. Thus, the 1-MHz signal must have been recorded.

When the recorded information was reproduced by a separate magnetooptical reproducing apparatus, its C/N ratio was:

60 dB...Example
60 dB...Comparative Example

Thus, it was demonstrated that the information was recorded.

A 2-MHz signal was recorded on the already recorded region of the medium 20 as new information.

When this information was similarly reproduced, the new information was reproduced, and it was demonstrated that the over-write operation could be performed. The C/N ratio upon over-write operation was as shown in Table 4.

Under this condition, each medium reached the corresponding temperature shown in Table 6.

Table 6

| Medium | Medium Temperature | |
|---|---|---|
| | Low Level | High Level |
| Example | $T_L$ 100°C | $T_H$ 200°C |
| Comparative Example | $T_L$ 105°C | $T_H$ 200°C |

## Claims

1. A magnetooptical recording medium (20) capable of performing an over-write operation upon radiation of a laser beam which is pulse-modulated between high and low levels, comprising:

a substrate (S); and

a magnetic layer stacked on said substrate and including a first layer (1) having a perpendicular magnetic anisotropy and constituting a recording layer, and a second layer (2) having a perpendicular magnetic anisotropy and constituting a reference layer;

wherein:

said second layer (2) comprises a composition selected from transition metal-rare earth alloy compositions;

the recording medium (20) satisfies the following relationship between the temperature characteristics of the first (1) and second (2) layers:

$$T_R < T_{C1} \leq T_{C2}$$

where

$T_R$ : room temperature
$T_{C1}$ : Curie temperature of the first layer (1)
$T_{C2}$ : Curie temperature of the second layer (2);

and

said recording medium (20) satisfies any one of the following Conditions (1) and (2) at room temperature $T_R$:

Condition (1):

$$H_{C1} > H_{C2} + |H_{D1} - H_{D2}|$$

$$H_{C1} > H_{D1}$$

$$H_{C2} > H_{D2}$$

$$H_{C2} + H_{D2} < |H_{ini}| < H_{C1} + H_{D1}$$

Condition (2):

$$H_{C1} > H_{C2} + |H_{D1} + H_{D2}|$$

$$H_{C1} > H_{D1}$$

$$H_{C2} > H_{D2}$$

$$H_{C2} + H_{D2} < |H_{ini}| < H_{C1} - H_{D1}$$

where

$H_{C1}$ :  coersivity of the first layer (1)

$H_{C2}$ :  coersivity of the second layer (2)

$H_{D1} = \dfrac{\sigma_w}{2M_{s1}t_1}$ :  coupling field received by the first layer (1)

$H_{D2} = \dfrac{\sigma_w}{2M_{s2}t_2}$ :  coupling field received by the second layer (2)

$H_{ini}$ :  initial field

$\sigma_w$ :  interface wall energy (exchange coupling force) between the first (1) and second (2) layers

$M_{S1}$ :  saturation magnetization of the first layer (1)

$M_{S2}$ :  saturation magnetization of the second layer (2)

$t_1$ :  film thickness of the first layer (1)

$t_2$ :  film thickness of the second layer (2);

characterised in that:

said first layer (1) comprises an alloy composition selected from the group consisting of DyFeCo and TbDy-FeCo, and in that said alloy composition is selected from the formula:

$$(Tb_U Dy_{100-U})_V (Fe_{100-W} Co_W)_{100-V}$$

where

U = 0 to 60 atomic %

V = 10 to 30 atomic %

W = 5 to 40 atomic %.

2. A recording medium according to claim 1, wherein said recording medium (20) satisfies the following condition:

$$T_R < T_{C1} \approx T_L < T_{C2} \approx T_H$$

where

$T_H$ :  temperature of said recording medium (20) when high-level laser beam is radiated

$T_L$ :  temperature of said recording medium (20) when low-level laser beam is radiated.

3. A recording medium according to claim 1, wherein said recording medium (20) satisfies the following condition:

$$T_R < T_L < T_{C1} < T_H \leq T_{C2}$$

where

$T_H$ :  temperature of said recording medium (20) when high-level laser beam is radiated

$T_L$ :  temperature of said recording medium (20) when low-level laser beam is radiated.

4. A recording medium according to claim 1, wherein said recording medium (20) satisfies the following condition:

$$T_R < T_L < T_H \leq T_{C1} \leq T_{C2}$$

where

$T_H$ :  temperature of said recording medium (20) when high-level laser beam is radiated

$T_L$ :  temperature of said recording medium (20) when low-level laser beam is radiated.

5. A recording medium (20) according to claim 1, wherein said second layer (2) has a compensation temperature $T_{comp.2}$ between room temperature $T_R$ and the Curie temperature $T_{C2}$ of said second layer (2), and said compensation temperature $T_{comp.2}$ of the second layer (2) is less than the Curie temperature $T_{C1}$ of said first layer (1).

**Patentansprüche**

1. Magnetooptisches Aufzeichnungsmedium (20), das bei Bestrahlung mit einem zwischen hohen und niedrigen Pegeln pulsmodulierten Laserstrahl überschreibfähig ist, umfassend:

ein Substrat (S); und

eine magnetische, auf dem Substrat befindliche Schicht, umfassend eine erste Schicht (1) mit einer senkrechten magnetischen Anisotropie, die eine Aufzeichnungsschicht bildet, und einer zweiten Schicht (2) mit einer senkrechten magnetischen Anisotropie, die eine Referenzschicht bildet;

wobei:

die zweite Schicht (2) eine Zusammensetzung aufweist, die ausgewählt ist aus Übergangsmetall-Seltenerd-Legierungszusammensetzungen;

das Aufzeichnungsmedium (20) die folgende Beziehung zwischen den Temperaturkennlinien der ersten (1) und der zweiten Schicht (2) aufweist:

$$T_R < T_{C1} \leq T_{C2}$$

wobei

$T_R$ : Zimmertemperatur

$T_{C1}$ : Curietemperatur der ersten Schicht (1)

$T_{C2}$ : Curietemperatur der zweiten Schicht (2);

und das Aufzeichnungsmedium (20) bei Zimmertemperatur $T_R$ eine der folgenden Bedingungen (1) und (2) erfüllt:

Bedingung (1):

$$H_{C1} > H_{C2} + |H_{D1} - H_{D2}|$$

$$H_{C1} > H_{D1}$$

$$H_{C2} > H_{D2}$$

$$H_{C2} + H_{D2} < |H_{ini}| < H_{C1} + H_{D1}$$

Bedingung (2):

$$H_{C1} > H_{C2} + |H_{D1} + H_{D2}|$$

$$H_{C1} > H_{D1}$$

$$H_{C2} > H_{D2}$$

$$H_{C2} + H_{D2} < |H_{ini}| < H_{C1} - H_{D1}$$

wobei

$H_{C1}$ : Koerzitivkraft der ersten Schicht (1)

$H_{C2}$ : Koerzitivkraft der zweiten Schicht (2)

$H_{D1} = \dfrac{\sigma_w}{2 M_{s1} t_1}$ : von der ersten Schicht (1) empfangenes Koppelfeld

$H_{D2} = \dfrac{\sigma_w}{2 M_{s2} t_2}$ : von der zweiten Schicht (2) empfangenes Koppelfeld

$H_{ini}$ : Anfangsfeld

$\sigma_w$ : Grenzwandenergie (Austauschkoppelkraft) zwischen der ersten (1) und der zweiten (2) Schicht

$M_{S1}$ : Sättigungsmagnetisierung der ersten Schicht (1)

$M_{S2}$ : Sättigungsmagnetisierung der zweiten Schicht (2)

$t_1$ : Schichtdicke der ersten Schicht (1)

$t_2$ : Schichtdicke der zweiten Schicht (2);

dadurch gekennzeichnet, daß
die erste Schicht (1) eine Legierungszusammensetzung aufweist, die aus der Gruppe DyFeCO und TbDyFeCO ausgewählt ist, und daß die Legierungszusammensetzung aus der Formel:

$$(Tb_U Dy_{100-U})_V (Fe_{100-W} Co_W)_{100-V}$$

ausgewählt ist, wobei:

U = 0 bis 60 Atom-%
V = 10 bis 30 Atom-%
W = 5 bis 40 Atom-%.

2. Aufzeichnungsmedium nach Anspruch 1, bei dem das Aufzeichnungsmedium (20) die folgende Bedingung erfüllt:

$$T_R < T_{C1} \approx T_L < T_{C2} \approx T_H$$

wobei

$T_H$ : Temperatur des Aufzeichnungsmediums (20) bei Bestrahlung mit Laserstrahl hohen Pegels
$T_L$ : Temperatur des Aufzeichnungsmediums (20) bei Bestrahlung mit Laserstrahl niedrigen Pegels.

3. Aufzeichnungsmedium nach Anspruch 1, bei dem das Aufzeichnungsmedium (20) die folgende Bedingung erfüllt:

$$T_R < T_L < T_{C1} < T_H \leq T_{C2}$$

wobei

$T_H$ : Temperatur des Aufzeichnungsmediums (20) bei Bestrahlung mit Laserstrahl hohen Pegels
$T_L$ : Temperatur des Aufzeichnungsmediums (20) bei Bestrahlung mit Laserstrahl niedrigen Pegels.

4. Aufzeichnungsmedium nach Anspruch 1, bei dem das Aufzeichnungsmedium (20) die folgende Bedingung erfüllt:

$$T_R < T_L < T_H \leq T_{C1} \leq T_{C2}$$

wobei

$T_H$ : Temperatur des Aufzeichnungsmediums (20) bei Bestrahlung mit Laserstrahl hohen Pegels
$T_L$ : Temperatur des Aufzeichnungsmediums (20) bei Bestrahlung mit Laserstrahl niedrigen Pegels.

5. Aufzeichnungsmedium (20) nach Anspruch 1, bei dem die zweite Schicht (2) eine Kompensationstemperatur $T_{comp.2}$ zwischen Zimmertemperatur $T_R$ und der Curietemperatur $T_{C2}$ der zweiten Schicht (2) aufweist, und die Kompensationstemperatur $T_{comp.2}$ der zweiten Schicht (2) niedriger ist als die Curietemperatur $T_{C1}$ der ersten Schicht (1).

## Revendications

1. Support d'enregistrement magnéto-optique (20) susceptible d'effectuer une opération d'écrasement sous l'action d'un rayonnement d'un faisceau laser qui est modulé en impulsion entre des niveaux haut et bas, comprenant :

un substrat (S), et
une couche magnétique empilée sur ledit substrat et comprenant une première couche (1) ayant une anisotropie magnétique perpendiculaire et constituant une couche d'enregistrement, et une deuxième couche (2) ayant une anisotropie magnétique perpendiculaire et constituant une couche de référence,
dans lequel :
ladite deuxième couche (2) a une composition sélectionnée parmi les compositions d'alliages de métaux de transition et de terres rares,
le support d'enregistrement (20) répond à la relation suivante entre les caractéristiques de température de la première (1) et de la deuxième (2) couches :

$$T_R < T_{C1} \leq T_{C2}$$

dans laquelle :

$T_R$ est la température ambiante,

$T_{C1}$ est la température de Curie de la première couche (1),

$T_{C2}$ est la température de Curie de la deuxième couche (2), et

ledit support d'enregistrement (20) satisfait à l'une quelconque des conditions suivantes (1) et (2) à température ambiante $T_R$ :

Condition (1) :

$$H_{C1} > H_{C2} + |H_{D1} \ H_{D2}|$$

$$H_{C1} > H_{D1}$$

$$H_{C2} > H_{D2}$$

$$H_{C2} + H_{D2} < |H_{ini}| < H_{C1} + H_{D1}$$

Condition (2) :

$$H_{C1} > H_{C2} + |H_{D1} + H_{D2}|$$

$$H_{C1} > H_{D1}$$

$$H_{C1} > H_{D2}$$

$$H_{C2} > H_{D2} < |H_{ini}| < H_{C1} - H_{D1}$$

dans lesquelles :

$H_{C1}$ est la force coercitive de la première couche (1),

$H_{C2}$ est la force coercitive de la deuxième couche (2),

$$H_{D1} = \frac{\sigma_w}{2M_{S1}t_1}$$

est le champ de couplage reçu par la première couche (1),

$$H_{D2} = \frac{\sigma_w}{2M_{S2}t_2}$$

est le champ de couplage reçu par la deuxième couche (2),

$H_{ini}$ est le champ initial,

$\sigma_W$ est l'énergie de paroi interfaciale (force de couplage d'échange) entre la première (1) et la deuxième (2) couches,

$M_{S1}$ est l'aimantation à saturation de la première couche (1),

$M_{S2}$ est l'aimantation à saturation de la deuxième couche (2),

$t_1$ est l'épaisseur de film de la première couche (1),

$t_2$ est l'épaisseur de film de la deuxième couche (2),

caractérisé en ce que :

ladite première couche (1) a une composition d'alliage sélectionnée dans le groupe formé de DyFeCo et TbDy-FeCo, et en ce que ladite composition d'alliage est choisie à partir de la formule :

$$(Tb_U Dy_{100-U})_V (Fe_{100-W} Co_W)_{100-V}$$

dans laquelle :

U = 0 à 60 atomes %

V = 10 à 30 atomes %

W = 5 à 40 atomes %.

2. Support d'enregistrement selon la revendication 1, dans lequel ledit support d'enregistrement (20) satisfait à la

condition suivante :

$$T_R < T_{C1} \approx T_L < T_{C2} \approx T_H$$

dans laquelle :

$T_H$ est la température dudit support d'enregistrement (20) lorsqu'on l'irradie par un faisceau laser de niveau élevé,
$T_L$ est la température dudit support d'enregistrement (20) lorsqu'on l'irradie par un faisceau laser de bas niveau.

3. Support d'enregistrement selon la revendication 1, dans lequel ledit support d'enregistrement (20) répond à la condition suivante :

$$T_R < T_L < T_{C1} < T_H \leq T_{C2}$$

dans laquelle :

$T_H$ est la température dudit support d'enregistrement (20) lorsqu'on l'irradie par un faisceau laser de haut niveau,
$T_L$ est la température dudit support d'enregistrement (20) lorsqu'on l'irradie par un faisceau laser de bas niveau.

4. Support d'enregistrement selon la revendication 1, dans lequel ledit support d'enregistrement (20) satisfait à la condition suivante :

$$T_R < T_L < T_H \leq T_{C1} \leq T_{C2}$$

dans laquelle :

$T_H$ est la température dudit support d'enregistrement (20) lorsqu'on l'irradie par un faisceau laser de haut niveau,
$T_L$ est la température dudit support d'enregistrement (20) lorsqu'on l'irradie par un faisceau laser de bas niveau.

5. Support d'enregistrement (20) selon la revendication 1, dans lequel ladite deuxième couche (2) a une température de compensation $T_{comp2}$ entre la température ambiante $T_R$ et la température de Curie $T_{C2}$ de ladite deuxième couche (2), et ladite température de compensation $T_{comp.2}$ de la deuxième couche (2) est inférieure à la température de Curie $T_{C1}$ de ladite première couche (1).

# FIG. 1

# FIG. 2

28

## FIG. 3

## FIG. 4A

| FIRST LAYER : RECORDING LAYER |
|---|
| SECOND LAYER : REFERENCE LAYER |

## FIG. 4B

| FIRST LAYER | ⇓ ⇓ ⇑ ⇓ ⇓ ⇑ ⇓ ⇑ ⇓ |
|---|---|
| SECOND LAYER | ⇑ ⇑ ⇑ ⇑ ⇑ ⇑ ⇑ ⇑ ⇑ |

EP 0 373 898 B1

FIG. 5

FIG. 6

FIG. 7

# FIG. 8A

P-TYPE MEDIUM

# FIG. 8B

A-TYPE MEDIUM

MODEL 1

TM-1    TM-2

RE-1    RE-2

MA-1    MA-2

*FIG. 9A*

MODEL 1

MA-1

MODEL 2

MA-2

MODEL 3

MA-1

MODEL 4

MA-2

*FIG. 9B*

*FIG. 10*

RE rich
(FIRST LAYER)

QUADRANT II     QUADRANT I

TM rich
(SECOND LAYER)          RE rich
(SECOND LAYER)

QUADRANT III     QUADRANT IV

TM rich
(FIRST LAYER)

## FIG. 11A

TYPE 1
COERSIVITY

TEMPERATURE

## FIG. 11B

TYPE 2
COERSIVITY

TEMPERATURE

## FIG. 11C

TYPE 3
COERSIVITY

TEMPERATURE

## FIG. 11D

TYPE 4
COERSIVITY

TEMPERATURE

*FIG. 12*
MEDIUM NO. 1

*FIG. 15*
MEDIUM NO. 4

# FIG. 13

CONDITION

<u>1a</u>  <u>1b</u>

CONDITION 2H

CONDITION 3H

CONDITION 4H

CONDITION 5H

CONDITION 6H

# FIG. 14

CONDITION 1a  <u>1b</u>

CONDITION 2La  2Lb

CONDITION 3L

CONDITION 4L

## FIG. 16

CONDITION    1a      1b

CONDITION 2H

CONDITION 3H

## FIG. 17

CONDITION 1a      1b

CONDITION 2L

## FIG. 18
### MEDIUM NO. 5

COERSIVITY

TEMPERATURE

$T_R$    $T_{comp.1}$    $T_L$   $T_H$   $T_{C1}$   $T_{C2}$

# FIG. 19

# FIG. 20

## *FIG. 21*

MEDIUM NO. 7

## *FIG. 22*

## *FIG. 23*

FIG. 24
MEDIUM NO. 8

COERSIVITY

TEMPERATURE

$T_R$   $T_L$   $T_{comp.\ 2}$   $T_H$   $T_{C1}$   $T_{C2}$

FIG. 25

CONDITION    1a        1b

⇧          ⇩
⇧          ⇧

CONDITION 2$_H$        ⇩   ↑Hb
                       ⇧

CONDITION 3$_H$        ⇩   ↑Hb
                       ⇩

CONDITION 4$_H$        ⇧   ↑Hb
                       ⇧

CONDITION 5$_H$        ⇧   ↑Hb
                       ⇩

FIG. 26

CONDITION 1a        1b

⇧          ⇩
⇧          ⇧

CONDITION 2$_L$        ⇩   ↑Hb
                       ⇧

# FIG. 27

| | |
|---|---|
| SECOND LAYER (REFERENCE) | ～2 |
| FIRST LAYER (RECORDING) | ～1 |
| SUBSTRATE | ～S |

L

# FIG. 28

INFORMATION
SIGNAL

PULSE LEVEL
ADJUSTABLE
LIGHT SOURCE
MODULATOR ～24

～23

～20

22  ～21  25